# EUROPEAN PATENT APPLICATION

(11) **EP 1 577 438 A1**
(43) Date of publication of application: **21.09.2005**
(21) Application number: 03782871.2
(22) Date of filing: 22.12.2003
(51) Int. Cl.: D21H 19/20, D21H 23/48, C09D 147/00, C08F 236/04

(54) **COPOLYMER LATEX FOR NONCONTACT COATING AND COMPOSITION COMPRISING THE SAME, AND COATED PAPER AND METHOD FOR PRODUCTION THEREOF**

(30) Priority: 25.12.2002 JP 2002374767; 26.12.2002 JP 2002377666; 08.04.2003 JP 2003104039; 10.04.2003 JP 2003107074
(71) Applicant: JSR Corporation, Tokyo 104-8410 (JP)
(72) Inventor: ZAMA, Yoshiaki, JSR Corporation, Chuo-ku, Tokyo 104-8410 (JP); ITO, Kazuaki, JSR Corporation, Chuo-ku, Tokyo 104-8410 (JP); MATSUI, Hisashi, JSR Corporation, Chuo-ku, Tokyo 104-8410 (JP); MATSUDA, Nobuhiro, JSR Corporation, Chuo-ku, Tokyo 104-8410 (JP); HIGUCHI, Atsushi, JSR Corporation, Chuo-ku, Tokyo 104-8410 (JP); ISHIKAWA, Osamu, JSR Corporation, Chuo-ku, Tokyo 104-8410 (JP)
(74) Representative: TBK-Patent
(86) International application number: PCT/JP2003/016447
(87) International publication number: WO 2004/061229

(57) **Abstract**

The copolymer latex for non-contact coating of the present invention is obtained by emulsion polymerization of a monomer containing from 23 to 58% by mass of an aliphatic conjugated diene monomer, from 0.1 to 7% by mass of an ethylenic unsaturated carboxylic acid monomer, from 5 to 40% by mass of a vinyl cyanide compound, and from 0 to 71.9% by mass of other monomer capable of being copolymerized with the other monomers (provided that the total amount of the monomers is 100% by mass), and polymer particles contained in the latex have an average particle diameter of from 50 to 150 nm. A coating composition for paper containing the latex, a pigment and the like is suitable for a non-contact coating method, such as a curtain coater and a spray, to obtain coated paper excellent in surface strength, printing gloss and the like with good runnability.

## Description

### TECHNICAL FIELD

The present invention relates to a copolymer latex for non-contact coating, a composition containing the same, a coated paper and a process for producing the same. More specifically, it relates to a copolymer latex that is suitable for a non-contact coating method, such as curtain coating and spray coating, and is capable of forming a coated paper excellent in surface strength, water-resistant strength and printing gloss, a composition containing the same, a coated paper that can be obtained by using the composition with good runnability, and a process for producing the same.

The coated paper of the present invention can be widely used in paper industry, printing industry and the like. The present invention can also be used in an offset printing paper (such as high-speed offset printing paper), a gravure printing paper, a letterpress paper, an ink-jet paper, an electrophotographic paper, a fine art paper, a magazine cover paper, a frontispieces paper, a poster paper, a catalog paper, a calendar paper, a brochure paper, a magazine paper, a magazine color page paper, a leaflet paper, a picture postcard paper, a card paper and the like.

### BACKGROUND ART

In order to improve appearance and printability of paper, in general, coated paper having coated thereon a coating liquid (coating composition for paper) mainly containing a white pigment, such as kaolin and calcium carbonate, and an aqueous binder is produced. According to the visualization of magazines and increase in amounts of inserted advertisements and leaflets in recent year, the production volume of coated paper is greatly increased. The coated paper is currently produced by coating mainly with a blade coater, a gate roll coater and a metering size press.

It is a major issue in production of coated paper how to coat base paper favorably by a small coated weight from the standpoint of cost. In order to improve the coating property, it is important to reduce the penetration amount into the base paper and to increase the bulk of the coated layer. In the case where the coated paper is produced with the aforementioned coating machines, however, there is such a problem that the coating liquid is significantly penetrated into the base paper due to the mechanism thereof, and the bulk of the coated paper is difficultly increased.

In the case of the so-called non-contact coating method, such as curtain coating and spray coating, on the other hand, it has been known that the coating liquid is not penetrated into the base paper, and the coated layer becomes bulky. In the curtain coating, the spray coating and the like, which are non-contact coating methods, paper suffers no stress and is prevented from being broken even upon high-speed coating, and thus thin base paper having a small basis weight and base paper having a small strength due to a large amount of filler can be coated. Under the circumstances, it has been considered that coated paper is produced by the non-contact coating method, such as curtain coating. However, the curtain coating and the spray coating have not yet been generally used for producing coated paper. This is mainly because of the following reasons.

In the aforementioned non-contact coating, a bulky coated paper can be obtained, but such a problem occurs that an ink is excessively absorbed to fail to obtain sufficient printing gloss because (1) the coated layer has a small strength, and (2) the coated layer has a porous structure. The amount of the binder used may be increased to prevent the problem, but it is not preferred since the cost is significantly increased.

It is primarily considered that an SBR latex having a low glass transition point (Tg) is used to improve the strength of the coated layer, but the use of the latex having the nature brings about such problems that the water resistant strength, which is necessary for offset printing, is lowered, the expression property of printing gloss is lowered, and the runnability on coating is deteriorated. Furthermore, in the case where the latex is coated with a curtain coater, if the lip, which is an ejection outlet of the coating liquid, is clogged, the coated weight at the clogged part is decreased to cause coating defect. Moreover, there are some cases where a non-coated part is produced due to breakage of the curtain. Therefore, there is increased risk of these problems by using a latex having a low Tg and a high cohesiveness, and in order to avoid the problems, for example, JP-A-7-119088 discloses a technique using a latex having a Tg of -10°C or more. In the technique, no sufficient adhesion strength to base paper can be obtained, and the coated layer has a lowered strength, which bring about deteriorated printability, such as picking. Upon using the latex, the same problems as in the curtain coating arise in the spray coating from the standpoint of clogging of nozzles.

The next reason is that high-speed coating is difficult. For example, in the case where the curtain coating is carried out at a coating speed equivalent to the ordinary blade coating, the curtain film is elongated under severe shearing stress due to the high coating speed. In the case where the coating liquid has poor high-speed flowability at this time, the coating liquid cannot be sufficiently spread to fail to form a continuous coated layer.

Another reason why the high-speed coating is difficult is defective coating due to puddling. The puddling means generation of isolation of the coating liquid (various sizes of droplets) in the vicinity of the contact point of the falling coating liquid with the base paper. The puddling causes wave-like defective coating to cause waste paper thereon, which brings about severe damages. It is also liable to cause breakage and contamination of the paper, which brings about large damages on productivity and workability. The puddling is liable to occur when the coating liquid has a lower viscosity, and the coating speed is larger. In the case where the viscosity of the coating liquid increased, the puddling can be suppressed, but a favorable curtain film is difficultly formed, and even if it can be formed, sufficient elongation and spread thereof on the base paper cannot be obtained. Therefore, the increase of the viscosity facilitates the aforementioned coating failure (such as coating defects and defective coating) to lower the product quality. The problems can be suppressed by lowering the coating speed, but it simultaneously lowers the productivity. JP-A-5-154435 proposes a coating liquid having a Reynolds number in a prescribed range to avoid the problems. However, higher productivity and product quality are being demanded.

In the curtain coating, the coating liquid is less penetrated into the base paper, and therefore, the surface of the base paper cannot be rapidly and sufficiently wetted therewith unless the coating liquid has a sufficiently low surface tension and good flowability. In the case where the surface of the base paper is not sufficiently wetted, coating defects (minute pores where a pigment is not coated on the surface of the coated paper) occur on the surface of the coated paper due to the influence of the surface shape. In the case where the resulting coated paper has coating defects, it is not preferred since unevenness occurs on blank surface property and printing. The coating defects can be suppressed by lowering the coating speed, but it is not preferred since the productivity is impaired. The coating defects can also be suppressed by lowering the solids content of the coating liquid, but it is not preferred since the drying load is increased to build up the investment on the drying equipment. It is also considered to avoid the coating defects by using various kinds of wetting agents, but no agent providing sufficient wettability has been found.

In the case of the spray coating, furthermore, the coating liquid is sprayed as fine mist from a nozzle under high pressure due to the coating principal thereof. In the case where the coating liquid has poor high-speed flowability at this time, it cannot be favorably sprayed from the tip of the nozzle to impair favorable coating.

Accordingly, such a novel latex, a novel coating liquid (coating composition for paper) formulation, and a novel production process of coated paper have been demanded that provide good printability at a high coating speed equivalent to the blade coating, and provide good runnability.

### DISCLOSURE OF THE PRESENT INVENTION

An object of the present invention is to provide such a coating composition for paper and a copolymer latex used therefor that solve the problem of increase of an amount of a binder to be used and reduction of a printing gloss upon producing coated paper by a non-contact coating method, such as curtain coating and spray coating, and are improved in runnability and workability.

In particular, an object of the present invention is to provide such a coating composition for paper that can attain curtain coating with good productivity (high-speed coating property and high solids content) to provide coated paper with high quality (small coating defects, good coating property and good paper surface property). Another object thereof is to provide coated paper having good quality by coating the coating composition for paper. A further object thereof is to provide such a production process that can provide coated paper having good quality by curtain coating with good productivity by using the coating composition for paper.

A still further object thereof is to provide such a process for producing pigment-coated paper that is excellent in productivity upon producing the coated paper by a curtain coater with less coating defects, and is excellent in various properties, such as expression property of paper gloss and expression property of printing gloss, and to provide such pigment-coated paper that has these excellent properties in a balanced manner.

Under the circumstances, the inventors have made earnest investigations, and as a result, the present invention has been completed.

The present invention is to attain the aforementioned objects and is described below.
1. A copolymer latex for non-contact coating obtained by emulsion polymerization of a monomer consisting of an aliphatic conjugated diene monomer (a) in an amount from 23 to 58% by mass, an ethylenic unsaturated carboxylic acid monomer (b) in an amount from 0.1 to 7% by mass, a vinyl cyanide compound (c) in an amount from 5 to 40% by mass, and other monomer (d) capable of being copolymerized with the monomers (a), (b) and (c) in an amount from 0 to 71.9% by mass (provided that the total amount of the monomers (a), (b), (c) and (d) is 100% by mass), characterized in that polymer particles contained in the latex have an average particle diameter of from 50 to 150 nm.
2. A copolymer latex for non-contact coating obtained by copolymerization of a monomer consisting of an aliphatic conjugated diene monomer (a) in an amount from 20 to 80% by mass, an ethylenic unsaturated carboxylic acid monomer (b) in an amount from 0.5 to 10% by mass, and other monomer (d) capable of being copolymerized with the monomers in an amount from 20 to 79.5% by mass (provided that the total amount of the monomers (a), (b) and (d) is 100% by mass), characterized in that the copolymer has at least two glass transition points in a range from -100 to 50°C and has a differential calorie curve obtained with a differential scanning calorimeter, in which a difference ΔT between the lowest temperature T1 and the highest temperature T2 in a transition region is 5°C or more.
3. The copolymer latex for non-contact coating according to Claim 2, wherein the copolymer consists of (P1) a copolymer part obtained by polymerization of a monomer (m1) consisting of an aliphatic conjugated diene monomer (a1) in an amount from 25 to 100% by mass, an ethylenic unsaturated carboxylic acid monomer (b1) in an amount from 0 to 10% by mass, and other monomer (d1) capable of being copolymerized with the monomers (a1) and (b1) in an amount from 0 to 75% by mass (provided that the total amount of the monomers (a1), (b1) and (d1) is 100% by mass) and having a glass transition point of from -100 to 0°C, and (P2) a copolymer part obtained by polymerization of a monomer (m2) consisting of an aliphatic conjugated diene monomer (a2) in an amount from 10 to 60% by mass, an ethylenic unsaturated carboxylic acid monomer (b2) in an amount from 0.5 to 30% by mass, and other monomer (d2) capable of being copolymerized with the monomers (a2) and (b2) in an amount from 10 to 89.5% by mass (provided that the total amount of the monomers (a2), (b2) and (d2) is 100% by mass) and having a glass transition point of from -20 to 50°C.
4. A non-contact coating composition for paper having a viscosity of from 50 to 1,500 mPa·s and a dynamic surface tension of from 25 to 65 mN/m at a surface lifetime of 10 ms.
5. The non-contact coating composition for paper according to Claim 4, wherein the composition further comprises a fine particle clay containing a component having a particle diameter of less than 2 µm in an amount from 95 to 99% by mass and a high aspect clay containing a component having a particle diameter of less than 2 µm in an amount from 80 to 89% by mass; the composition comprises a pigment containing 40% by mass or more of the fine particle clay and the high aspect clay based on 100% by mass of the total of the pigment, a copolymer latex and a wetting agent; and a solids content of the copolymer latex is from 5 to 30 parts by mass and the content of the wetting agent is from 0.01 to 2 parts by mass based on 100 parts by mass of the total of the pigment.
6. The non-contact coating composition for paper according to Claim 5, wherein the copolymer latex is obtained by copolymerization of an aliphatic conjugated diene monomer (a) in an amount from 30 to 60% by mass, an ethylenic unsaturated carboxylic acid monomer (b) in an amount from 0.1 to 7% by mass, and other monomer (d) capable of being copolymerized with the monomers in an amount from 33 to 69.9% by mass (provided that the total amount of the monomers (a), (b) and (d) is 100% by mass).
7. A process for producing coated paper comprising a coating step of coating a non-contact coating composition for paper comprising the copolymer latex for non-contact coating as defined in one of Claims 1 to 3 or the non-contact coating composition for paper as defined in one of Claims 4 to 6 on a surface of base paper at a coating speed of 600 to 2,800 m/min by a non-contact coating method; and a drying step of drying a coated film.
8. A process for producing coated paper comprising a step of coating a non-contact coating composition for paper comprising a pigment on a surface of base paper by a non-contact coating method, characterized in that the base paper has a center line average roughness of 3 µm or less in a frequency region of a spatial frequency of 25 (1/mm) or less and a center line average roughness of 0.2 µm or more in a frequency region of a spatial frequency of 25 (1/mm) or more.
9. The process for producing coated paper according to Claim 8, wherein a coating speed is from 600 to 2,800 m/min.
10. The process for producing coated paper according to Claim 8 or 9, wherein the non-contact coating composition for paper further comprises a copolymer latex and a wetting agent, and a solids content of the copolymer latex is from 5 to 30 parts by mass and a content of the wetting agent is from 0.01 to 2 parts by mass based on 100 parts by mass of the total of the pigment.
11. The process for producing coated paper according to Claims 8 to 10, wherein the pigment consist of a fine particle clay containing a component having a particle diameter of less than 2 µm in an amount from 95 to 99% by mass, a high aspect clay containing a component having a particle diameter of less than 2 µm in an amount from 80 to 89% by mass, and other pigment, and a content ratio of the fine particle clay and the high aspect clay is from 1/3 to 5/1, and a content of the other pigment is 60% by mass or less based on 100% by mass of the total of the pigment.
12. The process for producing coated paper according to Claims 7 to 11, wherein the non-contact coating method is a method selected from a curtain coating method and a spray coating method.
13. A coated paper characterized in that it is obtained by the process as defined in Claims 7 to 12.

### BRIEF DESCRIPTION OF THE DRAWINGS

Fig. 1 is an enlarged schematic cross sectional view of the vicinity of the surface of the base paper.
Fig. 2 is an enlarged schematic cross sectional view for describing the center line average roughness.

### EMBODIMENTS OF THE PRESENT INVENTION

The present invention will be described for the copolymer latex for non-contact coating, the non-contact coating composition for paper and the process for producing coated paper in this order below.

The first copolymer latex for non-contact coating of the present invention is a copolymer latex obtained by emulsion polymerization of a monomer consisting of an aliphatic conjugated diene monomer (a) in an mount from 23 to 58% by mass, an ethylenic unsaturated carboxylic acid monomer (b) in an amount from 0.1 to 7% by mass, a vinyl cyanide compound (c) in an amount from 5 to 40% by mass, and other monomer (d) capable of being copolymerized with the monomers (a), (b) and (c) in an amount from 0 to 71.9% by mass (provided that the total amount of the monomers (a), (b), (c) and (d) is 100% by mass), characterized in that polymer particles contained in the latex have an average particle diameter of from 50 to 150 nm.

Examples of the aliphatic conjugated diene monomer (a) include 1,3-butadiene, isoprene, 2-chloro-1,3-butadiene, chloroprene and the like. Among these, 1,3-butadiene is preferred. These compounds may be used solely or in combination of two or more kinds thereof. The use of the aliphatic conjugated diene monomer (a) imparts appropriate flexibility and elongation to the resulting copolymer, so as to provide coated paper having impact resistance.

The amount of the aliphatic conjugated diene monomer (a) to be used is from 23 to 58% by mass, preferably from 30 to 50% by mass, and more preferably from 38 to 48% by mass, based on the total monomer. In the case where the amount of the aliphatic conjugated diene monomer (a) to be used is less than 23% by mass, the copolymer becomes too stiff to provide such a tendency that the adhesion strength is difficultly exhibited. In the case of the non-contact coating method, such as the curtain coating method and the spray coating method, in particular, the coating composition for paper is not penetrated into the base paper to reduce the anchor effect, whereby the strength of the resulting coated paper is significantly reduced in the case where the copolymer does not have sufficient adhesion strength.

On the other hand, in the case where the amount of the aliphatic conjugated diene monomer (a) to be used exceeds 58% by mass, the cohesiveness becomes too high to provide sometimes deterioration in runnability, such as formation of contamination. Furthermore, the water resistant strength and the printing gloss of coated paper obtained with a composition containing the copolymer latex are also lowered.

Examples of the ethylenic unsaturated carboxylic acid monomer (b) include a monocarboxylic acid, a dicarboxylic acid, a half ester of a dicarboxylic acid and the like. The carboxylic acids preferably have a carbon number in a range from 4 to 7.

Examples of the monocarboxylic acid include acrylic acid, methacrylic acid, crotonic acid and the like. Examples of the dicarboxylic acid include fumaric acid, maleic acid, itaconic acid and the like. Examples of the half ester of a dicarboxylic acid include methyl fumarate, ethyl maleate, ethyl itaconate and the like. A carboxylic anhydride forming a dicarboxylic acid in an aqueous medium may also be used.

The carboxylic acids may be used solely or in combination of two or more kinds thereof.

The amount of the ethylenic unsaturated carboxylic acid monomer (b) to be used is from 0.1 to 7% by mass, preferably from 0.3 to 5% by mass, and more preferably from 0.5 to 3.5% by mass, based on the total monomer. In the case where the amount of the ethylenic unsaturated carboxylic acid monomer (b) to be used is less than 0.1% by mass, the latex is poor in stability upon polymerization to provide sometimes generation of a large amount of coagulated products. On the other hand, in the case where the amount of the ethylenic unsaturated carboxylic acid monomer (b) to be used exceeds 7% by mass, there are some cases where the viscosity of the coating composition becomes too high to impair the coating operation.

Examples of the vinyl cyanide compound (c) include acrylonitrile, methacrylonitrile and the like. These may be used solely or in combination of two or more kinds thereof.

The amount of the vinyl cyanide compound (c) to be used is from 5 to 40% by mass, preferably from 10 to 35% by mass, and more preferably from 10 to 30% by mass, based on the total monomer. In the case where the amount of the vinyl cyanide compound (c) to be used is less than 5% by mass, absorption of an ink solvent to the copolymer cannot be sufficiently suppressed to fail to suppress excessive absorption of the ink to the coated layer having a porous structure, which is a characteristic feature of a coated layer obtained by a non-contact coating method, whereby sufficient printing gloss cannot be obtained. On the other hand, in the case where the amount of the vinyl cyanide compound (c) to be used exceeds 40% by mass, the resulting coated paper suffers extreme deterioration in water resistant strength, and color degradation of the coated paper (yellowing due to lapse of time) is accelerated.

The monomer (d) is not particularly limited as far as it is capable of being copolymerized with the monomers (a), (b) and (c), and examples thereof include an aromatic vinyl compound, an alkyl (meth)acrylate, an acrylamide compound, N-methylolacrylamide, vinyl acetate and the like. A copolymer having a glass transition temperature suitable for the intended purpose can be obtained by changing the using proportions of the monomers (a), (b), (c) and (d).

Examples of the aromatic vinyl compound, include styrene, α-methylstyrene, p-methylstyrene, vinyltoluene, chlorostyrene and the like. Among these, styrene is particularly preferred.

Examples of the alkyl (meth)acrylate include methyl (meth)acrylate, ethyl (meth)acrylate, propyl (meth)acrylate, butyl (meth)acrylate, 2-ethylhexyl (meth)acrylate, octyl (meth)acrylate, benzyl (meth)acrylate, lauryl (meth)acrylate, stearyl (meth)acrylate, isobornyl (meth)acrylate, 2-cyanoethyl (meth)acrylate and the like. Among these, methyl methacrylate is particularly preferred.

Examples of the acrylamide compound include acrylamide, methacrylamide, N,N-dimethylacrylamide, N,N-dimethylaminopropyl (meth)acrylamide and the like.

These monomers may be used solely or in combination of two or more kinds thereof. The amount of the monomer (d) to be used is from 0 to 71.9% by mass, preferably from 10 to 60% by mass, and more preferably from 20 to 50% by mass, based on the total monomer.

The emulsion polymerization of the monomers may be effected generally in an aqueous medium using an emulsifying agent, a polymerization initiator, a molecular weight adjusting agent and the like.

Examples of the emulsifying agent include an anionic surfactant, a nonionic surfactant, an amphoteric surfactant and the like. These may be used solely or in combination of two or more kinds thereof.

Examples of the anionic surfactant include a sulfate ester of a higher alcohol, an alkylbenzene sulfonate salt, an aliphatic sulfonate salt, a sulfate ester of polyethylene glycol alkyl ether and the like.

Examples of the nonionic surfactant include an alkylester type, an alkylether type, an alkylphenylether type of polyethylene glycol and the like.

Examples of the amphoteric surfactant include those having a carboxylate salt, a sulfate salt, a sulfonate salt or a phosphate ester salt as an anionic part, an amine salt or a quaternary ammonium salt as a cationic part and the like, and specific examples thereof include a betaine compound, such as laurylbetaine and stearylbetaine, and an amino acid type compound, such as lauryl-β-alanine, stearyl-β-alanine, lauryldi(aminoethyl)glycine and octyldi(aminoethyl)glycine.

Examples of the polymerization initiator include a water soluble polymerization initiator, an oil soluble polymerization initiator, a redox system polymerization initiator having a combination of these initiators with a reducing agent and the like. Examples of the water soluble polymerization initiator include sodium persulfate, potassium persulfate, ammonium persulfate and the like. Examples of the oil soluble polymerization initiator include benzoyl peroxide, lauryl peroxide, 2,2'-azobisisobutyronitrle and the like. The water soluble polymerization initiators and the oil soluble polymerization initiators may be used solely or in combination of two or more kinds thereof.

Examples of the reducing agent used in the redox system polymerization initiator include erythorbic acid (including a salt thereof), ascorbic acid (including a salt thereof), a saccharide, a bisulfite salt, a thiosulfite salt, mercaptan and the like. These may be used solely or in combination of two or more kinds thereof.

Examples of the molecular weight adjusting agent include those capable of being used in the ordinary emulsion polymerization, for example, a carbon halogenide compound, such as chloroform and carbon tetrabromide, a mercaptan compound, such as n-hexylmercaptan, n-octylmercaptan, n-dodecylmercaptan, t-dodecylmercaptan and thioglycolic acid, a xanthogen compound, such as dimethylxanthogen disulfide and diisopropylxanthogen disulfide, terpinolene, α-methylstyrene dimer, and 1,1-diphenylethylene.

In addition to the above, a chelating agent, an inorganic electrolyte and the like may be used in the emulsion polymerization, and the known compounds may be used therefor.

The average particle diameter of the polymer particles contained in the copolymer latex of the present invention is from 50 to 150 nm, preferably from 55 to 130 nm, more preferably from 60 to 110 nm, and further preferably from 70 to 100 nm. In the case where a copolymer latex containing polymer particles having an average particle diameter exceeding 150 nm is used, the coating composition for paper is lowered in high-speed flowability, and in the case where the curtain coating method is effected at a high coating speed equivalent to the ordinary blade coating, the curtain film is elongated under severe shearing stress, whereby the coating composition (coating composition for paper) cannot be sufficiently elongated and spread to fail to form a continuos coated layer. In the case where the average particle diameter of the polymer particles is less than 50 nm, the flowability of the coating composition is not improved, and the paper gloss and the ink receptivity of the resulting coated paper are considerably lowered. The flowability of the coating composition is not improved if the average particle diameter is reduced to less than 50 nm.

In order to obtain the average particle diameter of the polymer particles contained in the copolymer latex within the aforementioned range, it can be adjusted by the kind and the amount of the emulsifying agent to be used, the kind and the amount of the polymerization initiator to be used, the kind and the amount of a monomer having a polar group to be used, the monomer concentration, the polymerization temperature and the like. Examples of the preferred adjusting method include increase of the amount of the emulsifying agent to be used.

Examples of the polymerization method in the emulsion polymerization include a method, in which a part of the monomer is polymerized, and the balance thereof is continuously or intermittently added, and a method, in which the monomer is continuously added from the initial stage of the polymerization.

The polymerization temperature is generally from 20 to 85°C, and preferably from 25 to 80°C. The polymerization time is generally from 10 to 30 hours.

The first copolymer latex for non-contact coating of the present invention is obtained by emulsion polymerization of the monomers (a), (b), (c) and (d), and the preferred combinations of the polymerization ratios of the monomers are as follows. Assuming that the total amount of the monomers is 100% by mass, the ratio (a)/(b)/(c)/(d) is preferably from 30 to 50% by mass/from 0.3 to 5% by mass/from 10 to 35% by mass/ from 10 to 59.7% by mass, and more preferably from 38 to 48% by mass/from 0.5 to 3.5% by mass/from 10 to 35% by mass/from 13.5 to 51.5% by mass. In the case where the amount of the monomer (c) to be used is from 10 to 35% by mass, and the average particle diameter of the resulting polymer particles is from 50 to 150 nm, preferably from 55 to 110 nm, such coated paper that is particularly excellent in dry pick strength and wet pick strength can be obtained with a coating composition for paper containing the latex.

The second copolymer latex for non-contact coating of the present invention is obtained by copolymerization of a monomer consisting of an aliphatic conjugated diene monomer (a) in an amount from 20 to 80% by mass, an ethylenic unsaturated carboxylic acid monomer (b) in an amount from 0.5 to 10% by mass, and other monomer (d) capable of being copolymerized with the monomers in an amount from 20 to 79.5% by mass (provided that the total amount of the monomers (a), (b) and (d) is 100% by mass), characterized in that the copolymer has at least two glass transition points in a range from -100 to 50°C and has a differential calorie curve obtained with a differential scanning calorimeter, in which a difference ΔT between the lowest temperature T1 and the highest temperature T2 in a transition region is 5°C or more.

Examples of the aliphatic conjugated diene monomer (a) and the ethylenic unsaturated carboxylic acid monomer (b) include those described for the first copolymer latex for non-contact coating.

The amount of the aliphatic conjugated diene monomer (a) to be used is from 20 to 80% by mass, preferably from 25 to 75% by mass, and more preferably from 35 to 60% by mass, based on the total monomer. In the case where the amount of the aliphatic conjugated diene monomer (a) to be used is less than 20% by mass, the copolymer becomes too stiff to lower sometimes the adhesion strength. In the case where the amount of the aliphatic conjugated diene monomer (a) to be used exceeds 80% by mass, on the other hand, the cohesiveness becomes too high to provide deterioration in runnability. Furthermore, the water resistant strength and the printing gloss of coated paper obtained with a composition containing the copolymer latex are also lowered.

The amount of the ethylenic unsaturated carboxylic acid monomer (b) to be used is from 0.5 to 10% by mass, preferably from 0.8 to 8% by mass, and more preferably from 1 to 5% by mass, based on the total monomer. In the case where the amount of the ethylenic unsaturated carboxylic acid monomer (b) to be used is less than 0.5% by mass, the latex is poor in stability upon polymerization to provide sometimes generation of a large amount of coagulated products. In the case where the amount of the ethylenic unsaturated carboxylic acid monomer (b) to be used exceeds 10% by mass, on the other hand, there are some cases where the viscosity of the coating composition becomes too high to impair the coating operation.

The monomer (d) is not particularly limited as far as it is capable of being copolymerized with the monomers (a) and (b), and examples thereof include an aromatic vinyl compound, those exemplified for the first copolymer latex for non-contact coating, such as an alkyl (meth)acrylate, an acrylamide compound, N-methylolacrylamide and vinyl acetate. A copolymer having a glass transition temperature suitable for the intended purpose can be obtained by changing the using proportions of the monomers (a), (b), (c) and (d).

The amount of the monomer (d) to be used is from 20 to 79.5% by mass, preferably from 25 to 74.2% by mass, and more preferably from 30 to 60% by mass, based on the total monomer. In the case where the amount of the monomer (d) to be used is less than 20% by mass, the cohesiveness becomes too high to provide sometimes deterioration in runnability. In the case where the amount of the monomer (d) to be used exceeds 79.5% by mass, on the other hand, the copolymer becomes too stiff to lower sometimes the adhesion strength.

The second copolymer latex for non-contact coating of the present invention is preferably obtained by emulsion polymerization of the monomers (a), (b) and (d), and the preferred combinations of the polymerization ratios of the monomers are as follows. Assuming that the total amount of the monomers is 100% by mass, the ratio (a)/(b)/(d) is preferably from 33 to 60% by mass/from 0.8 to 8% by mass/from 32 to 66% by mass, and more preferably from 38 to 55% by mass/from 1 to 5% by mass/from 40 to 61% by mass.

The method for the emulsion polymerization may be the same as those described for the first copolymer latex for non-contact coating.

The second copolymer latex of the present invention may have at least two glass transition points in a range from -100 to 50°C. It may have three or more thereof. The copolymer has a differential calorie curve, in which a difference ΔT between the lowest temperature T1 and the highest temperature T2 in the transition region is 5°C or more, preferably 8°C or more, and more preferably 15°C or more.

In the case where the difference ΔT is less than 5°C, the printability cannot be maintained at a high level over a wide range of printing speed. Simultaneously, the coated paper is reduced in surface strength and impact resistance to fail to withstand impact deformation caused by a significantly large deformation speed received upon high-speed printing.

It is preferred that the lowest temperature T1 is in a range from -100 to 0°C, and the highest temperature T2 is in a range from -20 to 50°C, and it is particularly preferred that T1 is in a range from -70 to -5°C, and T2 is in a range from -15 to 45°C.

In the case where the glass transition point exceeds 50°C, the adhesion strength is deteriorated, and it is less than -100°C, the cohesiveness is increased to deteriorate the runnability. Furthermore, the water resistant strength and the printing gloss of coated paper are also greatly deteriorated.

It is preferred that the latex containing a copolymer having two or more glass transition points forms a hetero-phase structure with the copolymer part (P1) and the copolymer part (P2) shown below present in the same particle.

That is, the copolymer part (P1) is obtained by polymerization of a monomer (m1) consisting of an aliphatic conjugated diene monomer (a1) in an amount from 25 to 100% by mass, an ethylenic unsaturated carboxylic acid monomer (b1) in an amount from 0 to 10% by mass, and other monomer (d1) capable of being copolymerized with the monomers (a1) and (b1) in an amount from 0 to 75% by mass (provided that the total amount of the monomers (a1), (b1) and (d1) is 100% by mass) and has a glass transition point of from -100 to 0°C, and the copolymer part (P2) is obtained by polymerization of a monomer (m2) consisting of an aliphatic conjugated diene monomer (a2) in an amount from 10 to 60% by mass, an ethylenic unsaturated carboxylic acid monomer (b2) in an amount from 0.5 to 30% by mass, and other monomer (d2) capable of being copolymerized with the monomers (a2) and (b2) in an amount from 10 to 89.5% by mass (provided that the total amount of the monomers (a2), (b2) and (d2) is 100% by mass) and has a glass transition point of from -20 to 50°C.

As the aliphatic conjugated diene monomer (a1) used for forming the copolymer part (P1), the monomers having been described hereinabove may be used. The amount of the aliphatic conjugated diene monomer (a1) to be used is from 25 to 100% by mass, preferably from 35 to 90% by mass, and more preferably from 40 to 80% by mass. In the case where the amount of the aliphatic conjugated diene monomer (a1) to be used is less than 25% by mass, the copolymer becomes too stiff to lower the adhesion strength.

As the ethylenic unsaturated carboxylic acid monomer (b1) used for forming the copolymer part (P1), the monomers having been described hereinabove may be used. The amount of the ethylenic unsaturated carboxylic acid monomer (b1) to be used is from 0 to 10% by mass, preferably from 0 to 7% by mass, and more preferably from 0 to 3% by mass. In the case where the amount of the ethylenic unsaturated carboxylic acid monomer (b1) to be used exceeds 10% by mass, the viscosity of the coating composition becomes too high to impair sometimes the coating operation.

As the other monomer (d1) used for forming the copolymer part (P1), the monomers exemplified for the other monomer (d) capable of being copolymerized may be used. The amount of the other monomer (d1) to be used is from 0 to 75% by mass, preferably from 10 to 65% by mass, and more preferably from 20 to 55% by mass. In the case where the amount of the other monomer (d1) to be used exceeds 75% by mass, the copolymer becomes too stiff to lower the adhesion strength.

The copolymer part (P1) is preferably obtained by emulsion polymerization of the monomer (m1) consisting of the monomers (a1), (b1) and (d1), and the preferred combinations of the polymerization ratios of the monomers are as follows. The ratio (a1)/(b1)/(d1) is preferably from 35 to 90% by mass/from 0 to 7% by mass/from 3 to 65% by mass, and more preferably from 40 to 80% by mass/from 0 to 3% by mass/from 17 to 60% by mass based on 100% by mass of the total amount of the monomers.

The glass transition point of the copolymer part (P1) is from -100 to 0°C, preferably from -80 to -5°C, and more preferably from -70 to -5°C. In the case where the glass transition point exceeds 0°C, the adhesion strength is deteriorated.

As the aliphatic conjugated diene monomer (a2) used for forming the copolymer part (P2), the monomers having been described hereinabove may be used. The amount of the aliphatic conjugated diene monomer (a2) to be used is from 10 to 60% by mass, preferably from 10 to 55% by mass, and more preferably from 20 to 45% by mass. In the case where the amount of the aliphatic conjugated diene monomer (a2) to be used is less than 10% by mass, the copolymer becomes too stiff to lower the adhesion strength. In the case where the amount of the aliphatic conjugated diene monomer (a2) to be used exceeds 60% by mass, on the other hand, the cohesiveness is increased to deteriorate the runnability. Furthermore, the water resistant strength and the printing gloss of coated paper are also greatly deteriorated.

As the ethylenic unsaturated carboxylic acid monomer (b2) used for forming the copolymer part (P2), the monomers having been described hereinabove may be used. The amount of the ethylenic unsaturated carboxylic acid monomer (b2) to be used is from 0.5 to 30% by mass, preferably from 1 to 25% by mass, and more preferably from 2 to 20% by mass. In the case where the amount of the ethylenic unsaturated carboxylic acid monomer (b2) to be used is less than 0.5% by mass, the latex is poor in stability upon polymerization to provide sometimes generation of a large amount of coagulated products. In the case where the amount of the ethylenic unsaturated carboxylic acid monomer (b2) to be used exceeds 30% by mass, there are some cases where the viscosity of the coating composition becomes too high to impair the coating operation.

As the other monomer (d2) used for forming the copolymer part (P2), the monomers exemplified for the other monomer (d) capable of being copolymerized may be used. The amount of the other monomer (d2) to be used is from 10 to 89.5% by mass, preferably from 20 to 89% by mass, and more preferably from 30 to 70% by mass. In the case where the amount of the other monomer (d2) to be used is less than 10% by mass, the cohesiveness becomes too high to provide deterioration in runnability. In the case where the amount of the monomer (d2) to be used exceeds 89.5% by mass, on the other hand, the copolymer becomes too stiff to deteriorate the adhesion strength.

The copolymer part (P2) is preferably obtained by emulsion polymerization of the monomer (m2) consisting of the monomers (a2), (b2) and (d2), and the preferred combinations of the polymerization ratios of the monomers are as follows. The ratio (a2)/(b2)/(d2) is preferably from 10 to 55% by mass/from 0.5 to 20% by mass/from 25 to 89.5% by mass, and more preferably from 20 to 45% by mass/from 1 to 15% by mass/from 40 to 79% by mass based on 100% by mass of the total amount of the monomers.

The glass transition point of the copolymer part (P2) is from -20 to 50°C, preferably from -15 to 45°C, and more preferably from -10 to 40°C. In the case where the glass transition point is less than -20°C, the cohesiveness becomes too high to provide deterioration in runnability, and in the case where it exceeds 50°C, the copolymer becomes too stiff to lower the adhesion strength.

As for the constitutional ratio of the copolymer part (P1) and the copolymer part (P2), the copolymer part (P1) is preferably from 5 to 95 parts by mass, more preferably from 10 to 90 parts by mass, and more preferably from 15 to 80 parts by mass based on 100 parts by mass of the total amount of the copolymers. In the case where the constitutional ratio of the copolymer part (P1) is less than 5 parts by mass, there are some cases where the adhesion strength is insufficient, and in the case where it exceeds 95 parts by mass, the runnability is deteriorated.

As having been described, the second copolymer latex of the present invention has the copolymer part having a low glass transition point and the copolymer part having a high glass transition point in the same copolymer particle, and therefore, in the case where the second copolymer latex of the present invention is used in the non-contact coating method, such as the curtain coating method and the spray coating method, it exhibits excellent runnability, and resulting coated paper maintains the adhesion strength at a high level and maintains the printability at a high level without occurrence of picking or the like over a wide range of printing speed.

The particle diameter of the polymer particles contained in the copolymer latex having the aforementioned constitution is generally from 50 to 350 nm, preferably from 60 to 350 nm, and more preferably from 60 to 250 nm. The minimum film forming temperature of the polymer contained in the copolymer latex of the present invention is preferably less than 60°C, more preferably less than 50°C, and more preferably less than 40°C. In the case where the minimum film forming temperature exceeds 60°C, the adhesion strength is deteriorated.

In the case where the copolymer latex having the aforementioned constitution is produced by emulsion polymerization, as being similar to the case of the first copolymer latex for non-contact coating, it is preferred to employ, as similar to the seed polymerization, a method, in which the copolymer part (P1) is previously polymerized in a separate polymerization vessel, and after adding a prescribed amount thereof to a polymerization vessel, the copolymer part (P2) is then polymerized, a method, in which the copolymer part (P1) and the copolymer part (P2) are polymerized in the same polymerization vessel by multiple steps of two or more steps, and the like.

The polymerization temperature is preferably from 5 to 50°C, and more preferably from 10 to 50°C, for polymerizing the copolymer part (P1), and is preferably from 10 to 80°C, and more preferably from 15 to 75°C, for polymerizing the copolymer part (P2). The polymerization time is generally from 10 to 30 hours.

The copolymer part (P1) preferably has a polystyrene conversion weight average molecular weight of 100,000 or more, and more preferably 150,000 or more. In the case where the polystyrene conversion weight average molecular weight of the copolymer part (P1) is less than 100,000, sufficient adhesion strength cannot be obtained to weaken the strength of the coated layer, which results in deterioration in printability, such as picking.

The first and second copolymer latices for non-contact coating can constitute a non-contact coating composition for paper along with other agents, such as a pigment.

Examples of the pigment include an inorganic pigment and an organic pigment.

Examples of the inorganic pigment include clay, such as kaolin, barium sulfate, titanium oxide, calcium carbonate, satin white, talc, aluminum hydroxide, zinc oxide and the like. Examples of the organic pigment include polymer particles, such as hollow particles formed of polystyrene or the like, a urea formalin resin and the like. These may be used solely or in combination of two or more kinds thereof.

In the non-contact coating composition for paper, the aforementioned copolymer latex for non-contact coating is suitable as a binder. Therefore, the content ratio of the copolymer latex for non-contact coating and the pigment in the non-contact coating composition for paper is as follows. That is, the solids content of the copolymer latex is preferably from 5 to 30 parts by mass, and more preferably from 5 to 25 parts by mass based on 100 parts by mass of the pigment. In the case where the solids content of the copolymer latex is less than 5 parts by mass, the adhesion strength is significantly lowered, and in the case where it exceeds 30 parts by mass, on the other hand, the ink drying property is significantly lowered.

Examples of other binder component than the copolymer latex for non-contact coating include a water soluble substance, such as casein, a modified product of casein, starch, a modified product of starch, polyvinyl alcohol and carboxymethyl cellulose. In the case where these components are used in combination, the amount thereof to be used is preferably from 0 to 100 parts by mass, and more preferably from 20 to 60 parts by mass based on 100 parts by mass of the copolymer latex.

The non-contact coating composition for paper may arbitrarily contain various kinds of agents that have been ordinarily used, such as a viscosity adjusting agent, a pigment-dispersing agent, a water resistance improving agent, a defoaming agent, a pH adjusting agent, a coloring pigment and a fluorescent dye.

As the viscosity adjusting agent, a water soluble compound is generally used. Examples of the viscosity adjusting agent include, in addition to casein, a modified product of casein, starch, a modified product of starch, polyvinyl alcohol and carboxymethyl cellulose, which are exemplified for the binder component, a polycarboxylic acid series, a polyether series, a modified polycarboxylic acid series, a urethane-modified polyether series, a modified polyacrylic series, an associative polyacrylic series and the like. These may be used solely or in combination of two or more kinds thereof.

Examples of the pigment-dispersing agent include a polycarboxylic acid series, a polyphosphate salt series, a pyrophosphoric acid series, a hexametaphosphate salt series, a polyisoprenesulfonic acid series, a condensed naphthalenesulfonate salt series and the like. These may be used solely or in combination of two or more kinds thereof.

Examples of the water resistance improving agent include a zirconium compound series, a polyamide resin series, a polyamine resin series, a melamine resin series, a polyamidepolyurea resin series, a polyaminepolyurea resin series and the like. These may be used solely or in combination of two or more kinds thereof.

Examples of the defoaming agent include a silicone series, a silicone compound series, a hydrophobic silica series, a metallic soap series, a wax series, an emulsion wax series, a polyether series, an acetylene compound series and the like. These may be used solely or in combination of two or more kinds thereof.

The pH adjusting agent includes sodium hydroxide, potassium hydroxide, an ammonia aqueous solution and the like. These are preferably in a dissociated state in the coating composition for paper. These may be used solely or in combination of two or more kinds thereof.

Coated paper excellent in printing gloss and the like can be obtained by coating the non-contact coating composition for paper by the non-contact coating method, such as the curtain coating method and the spray coating method, and can be preferably used as paper for sheet offset printing, paper for web offset printing and the like. The coating composition can also be used as a coating agent for various kinds of printing paper, such as letterpress and gravure printing.

The non-contact coating composition for paper of the present invention is characterized by having a viscosity of from 50 to 1,500 mPa·s and a dynamic surface tension of from 25 to 65 mN/m at a surface lifetime of 10 ms.

The aforementioned "viscosity" is from 50 to 1,500 mPa·s, preferably from 50 to 1,200 mPa·s, and more preferably from 50 to 1,000 mPa·s. In the case where the viscosity of the non-contact coating composition paper is less than 50 mPa·s, puddling is liable to occur upon high-speed coating, and the coating composition for paper is excessively penetrated in to base paper, whereby it is difficult to obtain a favorable coating. In the case where it exceeds 1,500 mPa·s, on the other hand, it is not preferred since coating defects are liable to occur upon high-speed coating and with a high solids content.

The aforementioned "dynamic surface tension" is from 25 to 65 mN/m, preferably from 25 to 60 mN/m, and more preferably from 25 to 55 mN/m, at a surface lifetime of 10 ms. In the case where the dynamic surface tension of the non-contact coating composition paper is less than 25 mN/m, the coating composition for paper is excessively penetrated in to base paper, defective coating, such as coating defects and defective coating. In the case where it exceeds 65 mN/m, on the other hand, it is liable that sufficient wettability to base paper cannot be obtained upon high-speed coating to cause coating failure, and also puddling is liable to occur. The dynamic surface tension is a value measure by the maximum foam pressure method, and the "surface lifetime" is the elapsed time from the formation of the foam surface in the measurement. Therefore, when the measurement is effected with a shorter surface lifetime, the extreme initial stage close to the fluidized state in the way of the coating composition for paper transferring from the fluidized state to the static state is measured, i.e., the dynamic surface tension characteristics are measured. The dynamic surface tension can be measured, for example, with a dynamic surface tensitometer produced by Kruss GmBH (Model BP-2).

The preferred range of the viscosity and the preferred range of the dynamic surface tension may be various combinations. For example, it is preferred that the viscosity is from 50 to 1,200 mPa·s, and dynamic surface tension is from 25 to 60 mN/m at a surface lifetime of 10 ms. It is more preferred that the viscosity is from 50 to 1,000 mPa·s, and dynamic surface tension is from 25 to 55 mN/m at a surface lifetime of 10 ms.

In the case where the viscosity and the dynamic surface tension within the aforementioned ranges, the coating composition for paper of the present invention can be coated with substantially no defective coating at a high coating speed of preferably from 600 to 2,800 m/min, more preferably from 800 to 2,500 m/min, further preferably from 1,000 to 2,500 m/min, and particularly preferably from 1,100 to 2,300 m/min.

The aforementioned "solid concentration" is a proportion (content) of the solids content contained in the non-contact coating composition for paper of the present invention. The solid concentration may be appropriately selected depending on the components constituting the coating composition for paper of the present invention and the formulation thereof, and is preferably 50% by mass or more, more preferably 55% by mass or more, and further preferably 60% by mass or more. In the case where the solid concentration is 50% by mass or more, a favorable coating can be obtained by high-speed coating, and thus coated paper having excellent surface property can be efficiently obtained. The solid concentration is preferably 70% by mass or less, and more preferably 67% by mass or less. In the case where the solid concentration is 70% by mass or less, the color viscosity is suppressed from being increased to obtain a stable curtain film. The upper limit and the lower limit of the solid concentration may be various combinations. For example, it is preferably from 50 to 70% by mass, more preferably from 55 to 70% by mass, further preferably from 55 to 67% by mass, and particularly preferably from 60 to 67% by mass. The coating composition for paper can be coated at a high speed even with a high solid concentration owing to the aforementioned prescribed dynamic surface tension. The solid concentration herein means the evaporation residue by heating.

The non-contact coating composition for paper of the present invention may have a viscosity of from 50 to 1,500 mPa·s and a dynamic surface tension of from 25 to 65 mN/m at a surface lifetime of 10 ms, and the components constituting the composition are not particularly limited but generally contain a wetting agent, a pigment and a copolymer latex.

The aforementioned "wetting agent" is such a component that mainly exhibits the dynamic surface tension characteristics for the coating composition for paper of the present invention. The wetting agent is not particularly limited as far as it exhibits the characteristics, and may be used solely or in combination of two or more kinds thereof. An anionic surfactant is preferred therefor. The carbon number of the linear part (oleophilic group) in the molecule of the anionic surfactant is preferably 18 or less, more preferably from 10 to 15, and further preferably 12 or 13. In the case where the anionic surfactant has an aromatic ring, the carbon number of the linear part is preferably 18 or less, more preferably from 10 to 15, and further preferably 12 or 13, and the total carbon number is preferably 50 or less with the lower limit thereof being generally 16 or more. This is because the anionic surfactant has a large migration rate in the coating composition for paper. Examples of the anionic surfactant functioning as the wetting agent include a sulfonic acid surfactant, a sulfate ester surfactant, a carboxylic acid surfactant, and the like. These may be used solely or in combination of two or more kinds thereof.

Examples of the sulfonic acid surfactant include alkylsulfonic acid, sulfosuccinic acid, alkylallylsulfonic acid, estersulfonic acid, alkylnaphthalenesulfonic acid, N-acylsulfonic acid (including salts of all of them), and the like.

Examples of the sulfate ester surfactant include alkylallylethereal sulfate, ethereal sulfate, sulfated oil, ester sulfuric acid, alkyl sulfuric acid, amide sulfuric acid (including salts of all of them) and the like.

Examples of the carboxylic acid surfactant include an aliphatic acid and a salt thereof (aliphatic acid soap), rosin acid and a salt thereof (rosin acid soap), N-acylcarboxylic acid and a salt thereof ether carboxylic acid and a salt thereof, and the like.

Among these, a sulfonic acid surfactant and a sulfate ester surfactant are preferred. Furthermore, at least any of alkylsulfonic acid, alkylallysulfonic acid and ester sulfonic acid is preferred among the sulfonic acid surfactants, and at least either of an alkylallyletherial sulfate and etherial sulfate is preferred among the sulfate ester surfactant.

The content of the wetting agent in the coating composition for paper of the present invention is not particularly limited and is generally from 0.01 to 2 parts by mass, preferably from 0.01 to 1.5 parts by mass, and more preferably from 0.02 to 1 part by mass based on 100 parts by mass of the total of the pigment described later. In the case where the content of the wetting agent is 0.01 part by mass or more, the dynamic surface tension can be effectively lowered to exhibit sufficiently the aforementioned dynamic surface tension characteristics. Furthermore, the affinity between the pigment and the base paper is improved to suppress effectively the generation of the puddling phenomenon. In the case where the content of the wetting agent is 2 parts by mass or less, the coating composition for paper is prevented from being subducted into the base paper upon coating the composition on the base paper, so as to maintain the favorable coated state. Furthermore, the coating composition for paper is effectively prevented from causing bubbles therein to prevent coating failure.

The aforementioned "pigment" is not particularly limited, and the pigment having been exemplified can be used. The pigment used in the non-contact coating composition for paper preferably contains a fine particle clay (hereinafter, sometimes referred to as "fine particle clay (pc1)") and/or a high aspect clay (hereinafter, sometimes referred to as "high aspect clay (pc2)"). These kinds of clay can be used in combination with the inorganic pigment and/or the organic pigment as described above.

The aforementioned "fine particle clay (pc1)" is a pigment containing a component having a particle diameter of less than 2 µm in an amount from 95 to 99% by mass. The particle diameter distribution is in accordance with "TAPPI TEST METHODS T649 cm-90".

Examples of the fine particle clay (pc1) include Hydragloss, Hydragloss 90, Hydragloss 92, Hydralux 91, Hubergloss, Hubergloss 2000, Japangloss and Hydraglaze (all produced by J.M. Huber Corp.), Mirrorgloss, Mirrorgloss 91, Mirrorgloss J and Ultragloss 90 (all produced by Engelhard Corp.), Alphafine and DB Glaze (all produced by Imerys Minerals Inc.), Kaofine and Kaofine 90 (all produced by Thiele Kaolin Company), and Amazon SD and Amazon Premium (all produced by Cadam Caulim Da Amazonia, Brazil). Among these, Amazon SD and Amazon Premium are preferred. These may be used solely or in combination of two or more kinds thereof.

The aforementioned "high aspect clay (pc2)" is a pigment containing a component having a particle diameter of less than 2 µm in an amount from 80 to 89% by mass. The particle diameter distribution is in accordance with "TAPPI TEST METHODS T649 cm-90".

Examples of the high aspect clay (pc2) include Covergloss and Hydraplate (all produced by J.M. Huber Corp.), Nuclay, Miraclipse PG and Eclipse 650 (all produced by Engelhard Corp.), DB Plate (produced by Imerys Minerals Inc.), Kaowhite (produced by Thiele Kaolin Company), and Capim NP and Capim DG (all produced by Rio Capim Calcium, Brazil), and Century HC (produced by Para Pigment Company, Brazil). Among these, Capim NP, Capim DG and Century HC are preferred. These may be used solely or in combination of two or more kinds thereof.

As is described above, the fine particle clay (pc1) and the high aspect clay (pc2) each may be used solely, and may be used as a mixture. It is preferred in the present invention that the fine particle clay (pc1) and the high aspect clay (pc2) are used as a mixture. Upon using as a mixture, (1) only the fine particle clay (pc1) and the high aspect clay (pc2) may be used as a mixture, or (2) the fine particle clay (pc1) and the high aspect clay (pc2) are used as a mixture with other pigment.

In the aforementioned cases (1) and (2), the amounts of the fine particle clay (pc1) and the high aspect clay (pc2) to be used are not particularly limited, and it is preferred that the ratio fine particle clay (pc1)/high aspect clay (pc2) is from 1/3 to 5/1 by mass. In the case where the ratio is 1/3 or more, the high-speed flowability of the coating composition for paper is improved to suppress effectively coating defects from occurring. In the case where the ratio is 5/1 or less, the coating property of the coated layer is particularly improved.

In the aforementioned case (2), the total amount of the fine particle clay (pc1) and the high aspect clay (pc2) is preferably 40% by mass, and more preferably 60% by mass based on 100% by mass of the total amount of the pigment. In the case where the ratio is in the aforementioned range, the covering property can be sufficiently improved to suppress coating defects from occurring, whereby the coating composition for paper with excellent balance can be obtained.

The aforementioned "copolymer latex" is added to adhere the pigments each other and to adhere the pigments to the base paper. Accordingly, contamination of the plate due to picking and piling upon printing can be prevented, and blanket contamination can be prevented.

The physical property of the copolymer latex is not particularly limited. The average particle diameter of the copolymer particles contained in the copolymer latex is preferably from 50 to 150 nm, and more preferably from 60 to 130 nm. In the case where the average particle diameter is 50 nm or more, the particles are stabilized to suppress aggregation, and in the case where it is 150 nm or less, the coated film is improved in strength.

The toluene insoluble content of the copolymer is preferably from 60 to 99% by mass, and more preferably from 75 to 98% by mass. In the case where the toluene insoluble content is 60% by mass or more, the coated film is improved in strength, and in the case where it is 99% by mass or less, the film forming property is improved, whereby the adhesion strength between the base paper and the coated film is improved. Furthermore, the solids content of the copolymer latex is generally from 5 to 30% by mass.

The constitution of the copolymer latex is not particularly limited, and it may be one obtained by copolymerization of monomers selected from a variety of polymerizable monomers. The preferable copolymer latex is one by copolymerization of a monomer consisting of an aliphatic conjugated diene monomer (a), an ethylenic unsaturated carboxylic acid monomer (c) and other monomer (d) capable of being copolymerized with the monomer (a) and the monomer (b). The use of the copolymer latex obtained by copolymerization of the monomer (a), the monomer (b) and the monomer (d) provides the surface strength, the water resistance, the rigidity, the ink drying property, the printing gloss and the tackiness preventing property in high levels in a well balanced manner, and the surface strength can be improved only with a small amount thereof.

As the aliphatic conjugated diene monomer (a) and the ethylenic unsaturated carboxylic acid monomer (b), those exemplified for the first copolymer latex for non-contact coating can be used. As the monomer (d), an aromatic vinyl compound, a vinyl cyanide compound, an alkyl (meth)acrylate, an acrylamide compound, N-methylolacrylamide, vinyl acetate and the like exemplified for the first copolymer latex for non-contact coating can be used.

The amounts of the monomers to be used are not particularly limited, it is preferred that the monomer (a) to be used is from 30 to 60% by mass, the monomer (b) is from 0.1 to 7% by mass, and the monomer (d) is from 33 to 69.9% by mass based on 100% by mass of the total amount of the monomer (a), the monomer (b) and the monomer (d). It is more preferred that the monomer (a) is from 35 to 55% by mass, the monomer (b) is from 0.5 to 5% by mass, and the monomer (d) is from 40 to 64.5% by mass.

In the case where the proportion of the monomer (a) is in the range, the color viscosity can be easily maintained in the favorable range, and the coated film can be sufficiently improved in strength. In the case where the proportion of the monomer (b) is in the range, the particles constituting the copolymer latex can be effectively suppressed from being aggregated, and the latex viscosity and the color viscosity can be easily maintained in the favorable ranges. In the case where the proportion of the monomer (d) is in the range, it is preferred since the proportions of the monomer (a) and the monomer (b) can be in the aforementioned ranges.

The method of polymerizing the monomers is not particularly limited, and emulsion polymerization is preferably employed since the latex can be directly obtained through polymerization. The specific method of emulsion polymerization may be as having been described hereinabove.

The content of the copolymer latex in the coating composition for paper (the content of the solid components constituting the copolymer latex, hereinafter the same) is not particularly limited, and is generally from 5 to 30 parts by mass, preferably from 7 to 30 parts by mass, and more preferably from 7 to 20 parts by mass based on 100 parts by mass of the pigment. In the case where the content of the copolymer latex is 5 parts by mass or more, the pigment can be sufficiently adhered to the base paper, and in the case where it is 30 parts by mass or less, the opacity, the brightness, the paper gloss and the like can be effectively improved.

The coating composition for paper may contain other components than the pigment, the copolymer latex and the wetting agent. Examples of the other components include the viscosity adjusting agent, the defoaming agent, the water resistance improving agent, the pigment-dispersing agent, the pH adjusting agent, the coloring pigment, the fluorescent dye and the like, which have been described hereinabove. Among these, a surfactant may be used as the defoaming agent and the pigment-dispersing agent, and the surfactant used therefor is different from the surfactant used as the wetting agent in such a point that the surfactant herein is considerably small in effect of decreasing the dynamic surface tension.

The content of the viscosity adjusting agent in the coating composition for paper is not particularly limited, and is generally from 0.01 to 4 parts by mass, preferably from 0.01 to 3 parts by mass, and more preferably from 0.01 to 2 parts by mass based on 100 parts by mass of the pigment. In the case where the content of the viscosity adjusting agent is 0.01 part by mass or more, the viscosity adjusting effect is sufficiently exhibited, whereby puddling hardly occurs upon coating at a high speed, and excessive penetration into the base paper can be prevented, whereby excellent coating property can be easily obtained. In the case where it is 4 parts by mass or less, on the other hand, there are less cases where the viscosity adjusting effect becomes excessive, whereby a stable curtain can be easily obtained upon curtain coating, and coating defects can be easily prevented from occurring.

The content of the defoaming agent in the coating composition for paper is not particularly limited, and is generally from 0.01 to 2 parts by mass, and preferably from 0.05 to 0.5 part by mass based on 100 parts by mass of the total of the pigment.

The content of the pigment-dispersing agent in the coating composition for paper is not particularly limited, and is generally from 0.01 to 3 parts by mass, and preferably from 0.05 to 1 part by mass based on 100 parts by mass of the total of the pigment.

The content of the water resistance improving agent in the coating composition for paper is not particularly limited, and is generally from 0.01 to 3 parts by mass, preferably from 0.05 to 1 part by mass based on 100 parts by mass of the total of the pigment.

The content of the pH adjusting agent in the coating composition for paper is not particularly limited, and is generally from 0.01 to 2 parts by mass, preferably from 0.05 to 1 part by mass based on 100 parts by mass of the total of the pigment.

The contents of the pigments, the copolymer latex and the wetting agent constituting the coating composition for paper may be various combinations. It is preferred that the copolymer latex is from 5 to 30 parts by mass, and the wetting agent is from 0.01 to 2 parts by mass based on 100 parts by mass of the pigment. It is more preferred that the copolymer latex is from 5 to 25 parts by mass, and the wetting agent is from 0.01 to 1.5 parts by mass. It is particularly preferred that the copolymer latex is from 5 to 20 parts by mass, and the wetting agent is from 0.02 to 1 part by mass.

In the case where the viscosity adjusting agent is contained, it is preferred that the copolymer latex is from 5 to 30 parts by mass, the wetting agent is from 0.01 to 2 parts by mass, and the viscosity adjusting agent is from 0.01 to 4 parts by mass based on 100 parts by mass of the pigment. It is more preferred that the copolymer latex is from 5 to 25 parts by mass, the wetting agent is from 0.01 to 1.5 parts by mass, and the viscosity adjusting agent is from 0.01 to 3.5 parts by mass. It is particularly preferred that the copolymer latex is from 5 to 20 parts by mass, the wetting agent is from 0.02 to 1 parts by mass, and the viscosity adjusting agent is from 0.01 to 3 parts by mass.

The total amount of the pigment, the copolymer latex and the wetting agent is generally 95.5% by mass or more based on 100% by mass of the total amount of all the components of the coating composition for paper. In other words, the total amount of the other components (such as the viscosity adjusting agent and the medium contained in the copolymer latex) than the pigment, the copolymer latex and the wetting agent is preferably 4.5% by mass or less.

Coated paper can be produced by coating a non-contact coating composition for paper containing the first or second copolymer latex for non-contact coating or the non-contact coating composition for paper by the non-contact coating method.

Coated paper can be produced by using the non-contact coating composition for paper irrespective to the coating speed, and in the case where the non-contact coating composition for paper is used, in particular, the first process for producing coated paper of the present invention is characterized by containing a coating step of coating on a surface of base paper at a coating speed of from 600 to 2,800 m/min, and a drying step of drying the coated film.

The kind of pulp for forming the base paper is not particularly limited, and for example, mechanical pulp, chemical pulp, recycled pulp (DIP) and the like can be used. The base paper may contain, as a filler and an internal additive, a pigment, such as calcium carbonate, clay and talc, a sizing agent, such as an alkylketene dimer, rosin acid soap and aluminum sulfate, a paper durability improving agent, such as cationic starch and polyacrylamide, a bulk agent and the like. Furthermore, the surface of the base paper may be coated with a surface sizing agent, such as starch, acrylamide and an acrylate-styrene polymer, by using a size press, a gate roll coater, a metered size press and the like.

The aforementioned "coating step" is preferably a step carried out by using a curtain coating method. The coating conditions for the curtain coating method is not particularly limited, but the coating speed is from 600 to 2,800 m/min.

The aforementioned "coating speed" means the speed where the coating surface is conveyed upon coating the coating composition for paper onto the coating surface (which is generally the base paper). The coating speed is not particularly limited as far as the coating operation can be effected without causing defective coating, and it is preferred that the coating speed is as large as possible since the productivity is improved. In the production process of the present invention, the coating speed is from 600 to 2,800 m/min by using the non-contact coating composition for paper having a viscosity and a dynamic surface tension within the prescribed ranges, and the coating speed can be preferably from 800 to 2,500 m/min, more preferably from 1,000 to 2,500 m/min, and particularly preferably from 1,100 to 2,300 m/min. In the case where the coating speed is 600 m/min or more, a particularly favorable curtain film is produced to obtain coated paper having excellent quality. In the case where the coating speed is 2,800 m/min or less, on the other hand, the coating operation can be effected without occurrence of puddling. The aforementioned coating speed can be realized even in the case where the solid concentration of the coating liquid is in a high range from 50 to 70% by mass.

The aforementioned "drying step" may be carried out any manner, and the method and the conditions having been known in the art may be used.

The first process for producing coated paper of the present invention may have other steps than the coating step and the drying step. Examples of the other steps include a calender treating step for carrying out a calender treatment for adjusting the surface smoothness, a pigment coating step for similarly adjusting the surface smoothness, and a surface sizing step for adjusting the surface strength and the water absorbing property.

The calender treating step may be effected on the base paper, or the paper after the coating step and the drying step, and may be effected on both the base paper and the paper after the coating step and the drying step. Examples of a machine used in the calender treatment include a super calender, a machine calender and a soft nip calender. These may be used solely or in combination of two or more kinds thereof.

The pigment coating step may be effected on the base paper. Examples of the apparatus used in the pigment coating step include a size press, a gate roll coater, a metered size press, a blade coater and a rod blade coater. The surface sizing step may be effected on the base paper. Examples of the apparatus used in the surface sizing step include a gate roll coater, a size press and a metered size press coater.

The coated paper obtained by the production process has base paper and a coated layer, and the coated layer is formed on at least one surface of the base paper and is formed by using the non-contact coating composition for paper.

The coated layer is a layer obtained by drying a coated film formed on the surface of the base paper. The thickness of the layer is not particularly limited and is generally from 2 to 30 µm.

The coated paper may be subjected to a calender treatment for exploiting the characteristics of the coated layer. The smoothness and the glossiness can be sufficiently exerted by subjecting to the calender treatment. Examples of the apparatus used in the calender treatment include a super calender, a machine calender and a soft nip calender. These may be used solely or in combination of two or more kinds thereof.

The coated paper obtained by the production process has no coating failure and is excellent in coating property and surface property. Specifically, the dry pick strength and the wet pick strength, evaluated by the method for the example which will be described later, can be 3.5 or more, preferably 3.7 or more, and more preferably 3.9 or more.

The second process for producing coated paper of the present invention contains a step of coating a non-contact coating composition for paper containing a pigment on a surface of base paper by a non-contact coating method, characterized in that the base paper has a center line average roughness of 3 µm or less in a frequency region of a spatial frequency of 25 (1/mm) or less and a center line average roughness of 0.2 µm or more in a frequency region of a spatial frequency of 25 (1/mm) or more.

As described above, the base paper in the present invention necessarily has a center line average roughness in a frequency region of a spatial frequency of 25 (1/mm) or less and a center line average roughness in a frequency region of a spatial frequency of 25 (1/mm) or more in the specific ranges.

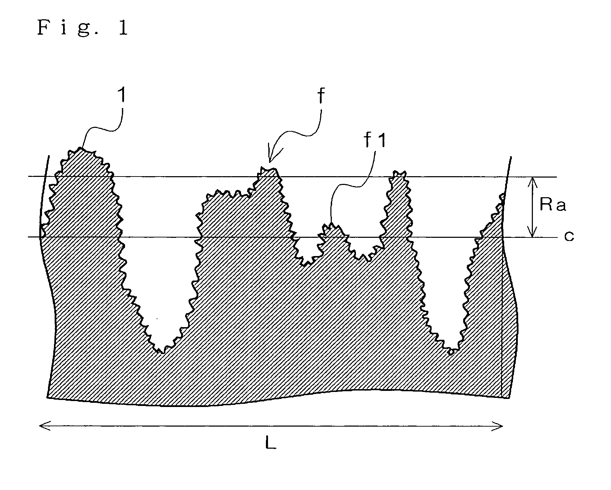

Fig. 1 shows an enlarged schematic cross sectional view of the base paper.

The aforementioned "spatial frequency" is a repetition number of a periodic pattern of the curve f (hereinafter, referred to as a "surface roughness curve f") constituting the surface of base paper 1 within a unit length (1 mm) as viewed from the cross sectional direction of the base paper 1. The spatial frequency can be measured, for example, by using "NewView 200, Optical Interference Non-contact Three-dimensional Surface Roughness Meter", produced by Zygo Corp.

The surface roughness curve f is constituted by overlapping curves of arbitrary spatial frequencies. The summary thereof is described with reference to Fig. 1. Finer curves (for example, f1 in Fig. 1) constituting the surface roughness curve f of the base paper 1 are present as the curves having arbitrary spatial frequencies, and the plural curves are overlapped to constitute the surface roughness curve f of the base paper 1. The aforementioned "frequency region of a spatial frequency of 25 (1/mm) or less" means a frequency region, in which the spatial frequency is 25 (1/mm) or less upon resolving the surface roughness curve f by each of spatial frequencies, and the aforementioned "frequency region of a spatial frequency of 25 (1/mm) or more" means a frequency region, in which the spatial frequency is 25 (1/mm) or more upon resolving the surface roughness curve f by each of spatial frequencies. The surface roughness curve can be resolved by fast Fourier transformation, for example, by using the analysis software "MetroPro ver. 7.6.1", which is supplied with the aforementioned three-dimensional surface roughness meter.

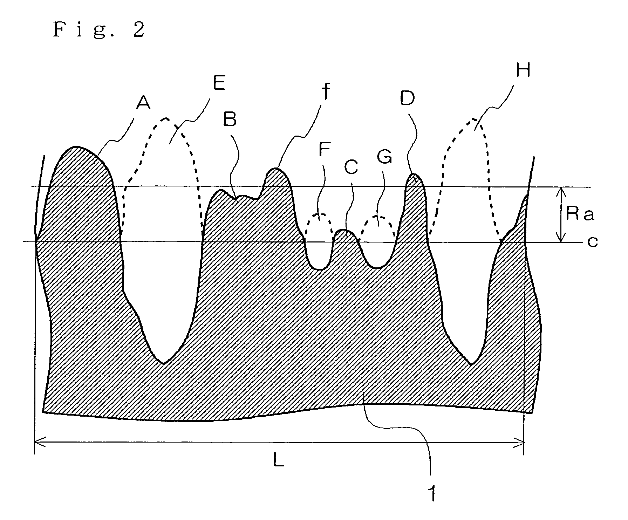

The aforementioned "center line average roughness" means a value expressed in terms of µm obtained by folding the surface roughness curve f at the center line c and dividing an area between the surface roughness curve f and the center line c by the length L. This can be measured by using the aforementioned apparatus. The "center line average roughness" will be described in detail with reference to the figure. As shown in Fig. 2, the total of the area of the plane (A, B, C and D) surrounded by the center line c and the surface roughness curve f and an area of the plane (E, F, G and H) surrounded by the center line c and the curve (expressed by the dotted line) obtained by folding the surface roughness curve f at the center line c is divided by the length L, and the resulting value is expressed in terms of µm.

The center line average roughness on the surface of the base paper in a frequency region of a spatial frequency of 25 (1/mm) or less (hereinafter, referred to as "Ra1") is a value showing the extent of roughness of the surface roughness curve f of the base paper 1 as shown in Fig. 1, i.e., an index value of coarse roughness on the surface of the base paper. In the process for producing pigment-coated paper of the present invention, the Ra1 is 3 µm or less, preferably 2.5 µm or less, more preferably 2.3 µm or less, further preferably 2.0 µm or less, still further preferably 1.8 µm or less, and particularly preferably 1.5 µm or less. In the case where the Ra1 exceeds 3 µm, it is not preferred since coating defects on the surface of the coated paper are increased upon coating a coating composition for paper having a high solids content by the high-speed curtain coating method. The lower limit of the Ra1 is not particularly limited and is generally 0.1 µm or more, preferably 0.3 µm or more, and more preferably 0.5 µm or more.

The center line average roughness on the surface of the base paper in a frequency region of a spatial frequency of 25 (1/mm) or more (hereinafter, referred to as "Ra2") is a value showing the extent of roughness of the finer curves (f1 in Fig. 1) constituting the surface roughness curve f of the base paper 1 as shown in Fig. 1, i.e., an index value of fine roughness on the surface of the base paper. In the process for producing pigment-coated paper of the present invention, the Ra2 is 0.2 µm or more, preferably 0.3 µm or more, more preferably 0.4 µm or more, further preferably 0.5 µm or more, and particularly preferably 0.6 µm or more. In the case where the Ra2 is less than 0.2 µm, there are some cases where the affinity between the coating composition for paper and the base paper is deteriorated, whereby a puddling phenomenon (surface roughening due to poor wettability, TAPPI Coating Conference 2001, Proceeding, p. 251) occurs upon curtain coating, particularly high-speed coating, or the anchor effect of the coating composition for paper to the base paper is deteriorated, so as to lower the strength of the resulting coated paper. The upper limit of the Ra2 is not particularly limited and is generally 4.0 µm or less, preferably 3.0 µm or less, more preferably 2.5 µm or less, and further preferably 2.0 µm or less.

The method of adjusting the Ra1 and the Ra2 is not particularly limited, and they can be adjusted to appropriate ranges by adjusting the smoothness by the known treatment. For example, the base paper may be subjected to a calender treatment, such as a super calender, a machine calender and a soft nip calender, to control the smoothness, whereby the Ra1 and the Ra2 can be adjusted to the desired ranges. Furthermore, the base paper may be subjected to a pigment coating by using a size press, a gate roll coater, a metered size press, a blade coater, a rod blade coater or the like, to control the smoothness, whereby the Ra1 and the Ra2 can be adjusted to the desired ranges.

The Ra1 and the Ra2 can be obtained by fast Fourier transformation, for example, by using a three-dimensional surface roughness meter and an analysis software "MetroPro ver. 7.6.1".

The coating composition for paper that is preferred in the second process for producing coated paper of the present invention is a composition that is coated on the surface of the base paper by a non-contact coating method, preferably a curtain coating method. The coating composition for paper generally contains a pigment, and depending on necessity, may contain such components as a copolymer latex and a wetting agent. The aforementioned non-contact coating composition for paper may also be preferably used.

The pigment is a main component for covering the base paper, and the kind thereof is not limited as far as it can cover the base paper. As the pigment, the pigments exemplified for the aforementioned non-contact coating composition for paper can be used, and as the pigment for the coating composition for paper, a combination of the fine particle clay (pc1), the high aspect clay (pc2) and other pigment is preferably used. As the fine particle clay (pc1) and the high aspect clay (pc2), those exemplified for the aforementioned non-contact coating composition for paper can be used. As the other pigment, the inorganic pigments and/or the organic pigments exemplified above can be used.

The amounts of the pigments to be used are not particularly limited, and it is preferred that they are mixed to provide a ratio fine particle clay (pc1)/high aspect clay (pc2) of from 1/3 to 5/1 by mass. In the case where the ratio is 1/3 or more, the high-speed flowability of the coating composition is improved to suppress coating defects from occurring. In the case where the ratio is 5/1 or less, the covering property of the coated layer can be suppressed from being deteriorated. The amount of the other pigment to be used is preferably 60% by mass or less (which may be 0% by mass), and particularly preferably 40% by mass or less based on 100% by mass of the total amount of the pigment. In the case where the amount of the other pigment to be used is in the range, the mixing ratio of the fine particle clay (pc1) and the high aspect clay (pc2) can be in an appropriate range, whereby such pigment-coated paper can be obtained that is excellent in balance between the suppression of coating defects and improvement in covering property.

The coating composition for paper may further contain a copolymer latex, in addition to the pigment. By adding the copolymer latex, the pigments can be adhered to each other, and the pigments can be adhered to the base paper, whereby contamination of the plate due to picking and piling upon printing can be prevented, and blanket contamination can be prevented.

The physical property of the copolymer latex is not particularly limited. The average particle diameter of the copolymer particles contained in the copolymer latex is preferably from 50 to 150 nm, and more preferably from 60 to 130 nm. In the case where the average particle diameter is 50 nm or more, the particles are stabilized to suppress aggregation, and in the case where it is 150 nm or less, the coated film is improved in strength.

The toluene insoluble content of the copolymer is preferably from 60 to 99% by mass, and more preferably from 75 to 98% by mass. In the case where the toluene insoluble content is 60% by mass or more, the coated film is improved in strength, and in the case where it is 99% by mass or less, the film forming property is improved, whereby the adhesion strength between the base paper and the coated film is improved.

The constitution of the copolymer latex is not particularly limited, and it is preferably obtained by copolymerization of various kinds of polymerizable monomers selected. The copolymer latex is preferably a copolymer latex obtained by emulsion polymerization of a monomer containing (a) an aliphatic conjugated diene monomer, (b) an ethylenic unsaturated carboxylic acid monomer and (d) other monomer capable of being copolymerized with the monomer (a) and the monomer (b).

As the aliphatic conjugated diene monomer (a) and the ethylenic unsaturated carboxylic acid monomer (b), those exemplified for the first copolymer latex for non-contact coating can be used. As the monomer (d), an aromatic vinyl compound, a vinyl cyanide compound, an alkyl (meth)acrylate, an acrylamide compound, N-methylolacrylamide, vinyl acetate and the like exemplified for the first copolymer latex for non-contact coating can be used.

The amounts of these monomers to be used are not particularly limited, and it is preferred that the monomer (a) to be used is from 30 to 60% by mass, the monomer (b) is from 0.1 to 7% by mass, and the monomer (d) is from 33 to 69.9% by mass based on 100% by mass of the total amount of the monomer (a), the monomer (b) and the monomer (d). It is more preferred that the monomer (a) is from 35 to 55% by mass, the monomer (b) is from 0.5 to 5% by mass, and the monomer (d) is from 40 to 64.5% by mass. In the case where the proportion of the monomer (a) is in the range, the color viscosity can be easily maintained in the favorable range, and the coated film can be sufficiently improved in strength. In the case where the proportion of the monomer (b) is in the range, the particles constituting the copolymer latex can be effectively suppressed from being aggregated, and the latex viscosity and the color viscosity can be easily maintained in the favorable ranges. In the case where the proportion of the monomer (b3) is in the range, it is preferred since the proportions of the monomer (b1) and the monomer (b2) can be in the aforementioned ranges.

The method of emulsion polymerization of the monomers may be the method described above.

The content of the copolymer latex in the coating composition for paper (the content of the solid components constituting the copolymer latex, hereinafter the same) is not particularly limited, and may be in various ranges depending on demanded properties. It is generally from 5 to 30 parts by mass, preferably from 7 to 30 parts by mass, and more preferably from 7 to 20 parts by mass based on 100 parts by mass of the pigment. In the case where the content of the copolymer latex is 5 parts by mass or more, the pigment can be sufficiently adhered to the base paper, and in the case where it is 30 parts by mass or less, the opacity, the brightness, the paper gloss and the like can be effectively improved.

The coating composition for paper may further contain a wetting agent. By adding the wetting agent, the wettability of the coating composition for paper to the surface of the base paper is improved to provide a favorable coated state. As the wetting agent, those exemplified for the aforementioned non-contact coating composition for paper can be used.

The content of the wetting agent in the coating composition is not particularly limited and may be in any range depending demanded properties. It is generally from 0.01 to 2 parts by mass, preferably from 0.02 to 1 part by mass based on 100 parts by mass of the total of the pigment described later. In the case where the content of the wetting agent is 0.01 part by mass or more, the affinity between the pigment and the base paper is improved to suppress the generation of the puddling phenomenon. In the case where the content of the wetting agent is 2 parts by mass or less, the coating composition for paper is prevented from being subducted into the base paper upon coating the composition on the base paper, so as to maintain the favorable coated state, whereby the resulting coated paper can be improved in strength.

The coating composition for paper may contain the components exemplified for the aforementioned non-contact coating composition for paper, in addition to the pigment, the copolymer latex and the wetting agent. The contents thereof may be the same as described in the foregoing.

The solid concentration of the coating composition for paper is not particularly limited and can be various ranges depending on the constitutional components, the kinds and the properties of the coating composition for paper. It is preferably 50% by mass or more, more preferably 55% by mass or more, and further preferably 60% by mass or more. In the case where the solid concentration is 50% by mass or more, the covering property of the coated layer can be improved to produce effectively pigment-coated paper having excellent surface property. The upper limit of the solid concentration is preferably 70% by mass or less, and preferably 67% by mass or less. By using the range, the color viscosity is suppressed from being increased to stabilize the resulting curtain film.

In the second process for producing coated paper of the present invention, the coating composition for paper is coated on the surface of the base paper by the non-contact coating method, preferably the curtain coating method. The coating operation may be effected on only one surface of the base paper or on both surfaces thereof. In the present invention, the coating composition may be generally coated directly on the base paper by the curtain coating method without an under layer provided before the coating operation, and depending on necessity, another pretreatment may be effected. The apparatus for carrying out the curtain coating method is not particularly limited, and a known curtain coating apparatus may be used.

The conditions for the curtain coating method are also not particularly limited, and the coating operation may be carried out by setting various conditions depending on necessity. For example, the coating speed of the curtain coating method is generally from 600 to 3,000 m/min, preferably from 600 to 2,800 m/min, more preferably from 800 to 2,500 m/min, further preferably from 1,000 to 2,500 m/min, and particularly preferably from 1,100 to 2,300 m/min. In the case where the coating speed is 600 m/min or more, breakage of the curtain film can be prevented since the curtain flow amount reaches an appropriate value, and in the case where it is 2,800 m/min or less, a puddling phenomenon can be prevented from being frequently occurring.

The coated weight may be appropriately adjusted depending on the property of the resulting pigment-coated paper, the property of the coating composition for paper, and the like. The coated weight (based on dry mass) per one surface of the base paper is generally from 0.1 to 50 g/m², preferably from 1 to 30 g/m², and more preferably from 3 to 25 g/m².

The coated paper can be obtained by drying after coating. The resulting pigment-coated paper may be further subjected to a calender treatment, such as super calender, machine calender and soft nip calender, to control the smoothness.

The coated paper (pigment-coated paper) of the present invention can be obtained by the aforementioned process for producing coated paper. The coated paper of the present invention may have a coated layer only on one surface or may have coated layers on both surfaces. Owing to the aforementioned constitution, the coated paper of the present invention is substantially free of unevenness in blank surface property and printing, and is excellent in paper gloss and printing gloss. Specifically, the paper gloss, which is evaluated by the method described for the example shown later, can be 60 or more, and preferably 63 or more. The printing gloss, which is evaluated by the method described for the example shown later, can be 75 or more, and preferably 77 or more. The opacity, which is evaluated by the method described for the example shown later, can be 87 or more, and preferably 90 or more. The brightness, which is evaluated by the method described for the example shown later, can be 80 or more, and preferably 82 or more. The dry pick strength and the wet pick strength, which is evaluated by the method described for the example shown later, can be 3.5 or more, preferably 3.9 or more, and more preferably 4.2 or more.

### BEST MODE FOR CARRYING OUT THE PRESENT INVENTION

The present invention will be described in more detail with reference to the following examples, but the present invention is not limited to the examples unless deviating from the substance thereof. In the examples and the comparative examples, all the parts and percents are by mass unless otherwise indicated.

### 1. Example [I]

### 1-1. Production of Copolymer Latex

### Example 1-1

200 parts of water, 0.5 part of sodium dodecylbenzenesulfonate and 1 part of sodium persulfate were charged in an autoclave having a stirrer equipped, the temperature of which could be controlled, and the components for the first step shown in Table 1 were charged at a time and reacted at 60°C for 1 hour. Thereafter, the components for the second and third steps shown in Table 1 were continuously added in the order at a rate of 10 parts/hour to continue the polymerization. After completing the addition, the reaction was further effected at 70°C for 6 hours to obtain a copolymer latex L-1 containing particles formed of a copolymer. The final polymerization conversion was 98%. The resulting copolymer latex L-1 was measured for the average particle diameter, the toluene insoluble content and the glass transition point of the polymer particles in the following manner. The results obtained are shown in Table 1.

### (1) Average Particle Diameter

The average particle diameter of the polymer particles was obtained by the ordinary manner using a submicron analyzer "Model N4", produced by Beckman Coulter, Inc.

### (2) Toluene Insoluble Content

The copolymer latex was adjusted to pH 8.0 with sodium hydroxide and then aggregated with isopropanol, and the aggregated product was washed with distilled water, followed by drying. Thereafter, a prescribed amount (about 0.03 g) of the sample was immersed in a prescribed amount (100 mL) of toluene at 25°C for 20 hours. The solution was filtered through a metallic sieve of 120 mesh, and the resulting solid residue was measured for mass, whereby the proportion (%) thereof with respect to the total solids content upon charging (before the treatment) was obtained.

### (3) Glass Transition Point

The resulting copolymer latex was vacuum-dried for 20 hours by heating to 100°C to form a film. The dried film was used as a measuring sample, and the measurement is effected according to the ASTM method by using a differential scanning calorimeter (DSC), produced by Du Pont, Inc.

### (4) High-speed Flowability

The resulting copolymer latex was measured for a relationship curve between the rotation number and the torque by using a Hercules viscometer under conditions of 6,600 rpm with bob F. An apparent viscosity (mPa·s) at 6,600 rpm was obtained from the curve for comparison.

### Examples 1-2 to 1-10

Copolymer Latices L-2 to L-10 were produced in the same manner as in Example 1-1 except that the raw materials shown in Tables 1 to 3 were used. The final polymerization conversion was from 98 to 99%. The resulting latices were evaluated in the aforementioned manners. The results obtained are shown in Tables 1 to 3.

### Comparative Example 1-1

200 parts of water, 0.5 part of sodium dodecylbenzenesulfonate and 1 part of sodium persulfate were charged in an autoclave having a stirrer equipped, the temperature of which could be controlled, and the components for the first step shown in Table 3 were charged at a time and reacted at 60°C for 1 hour. Thereafter, the components for the second step shown in Table 3 were continuously added at a rate of 10 parts/hour to continue the polymerization. After completing the addition, the reaction was further effected at 70°C for 6 hours to obtain a copolymer latex L-11 containing particles formed of a copolymer. The final polymerization conversion was 98%. The resulting copolymer latex L-11 was evaluated in the aforementioned manners. The results obtained are shown in Table 3.

### Comparative Examples 1-2 to 1-5

Copolymer Latices L-12 to L-15 were produced in the same manner as in Comparative Example 1-1 except that the raw materials shown in Tables 3 to 4 were used. The final polymerization conversion was from 98 to 99%. The resulting latices were evaluated in the aforementioned manners. The results obtained are shown in Tables 3 to 4.

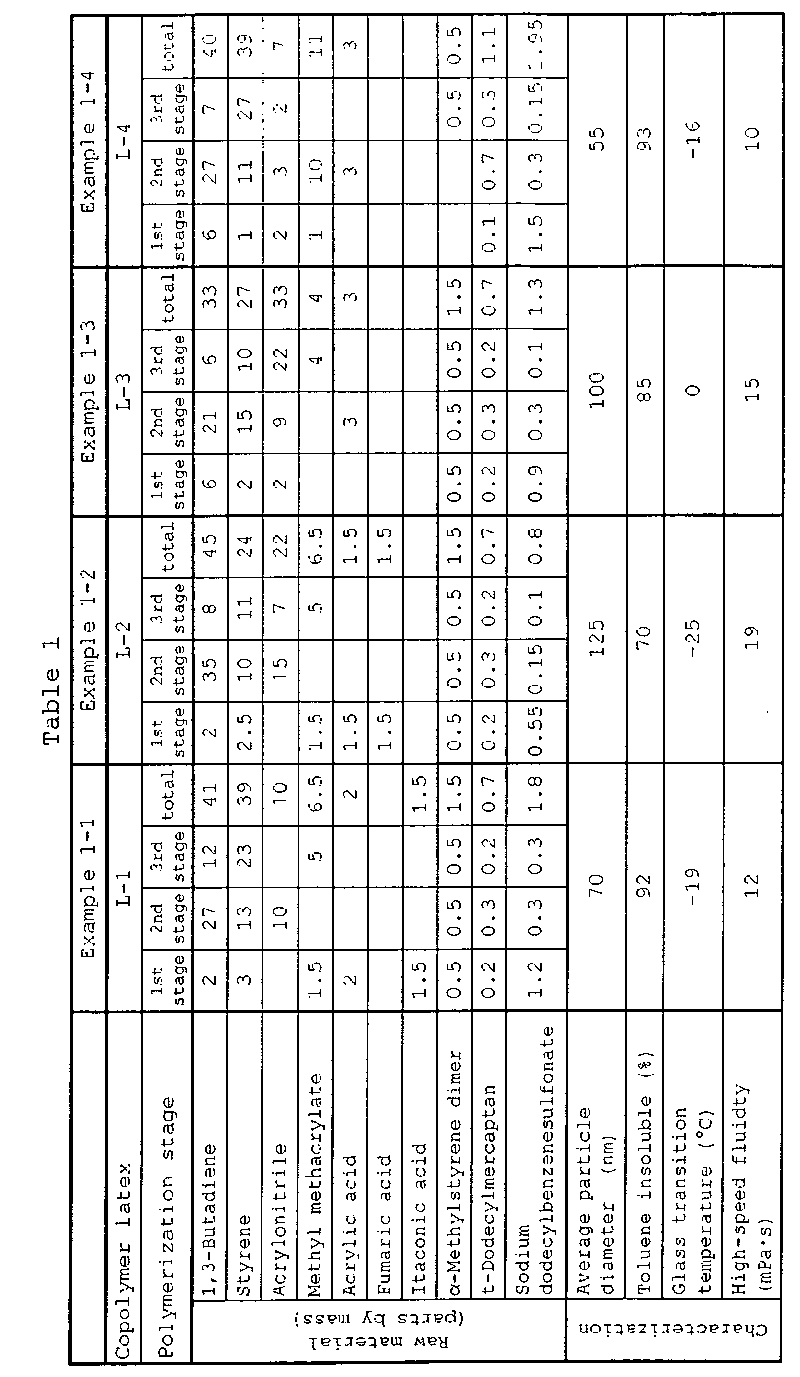

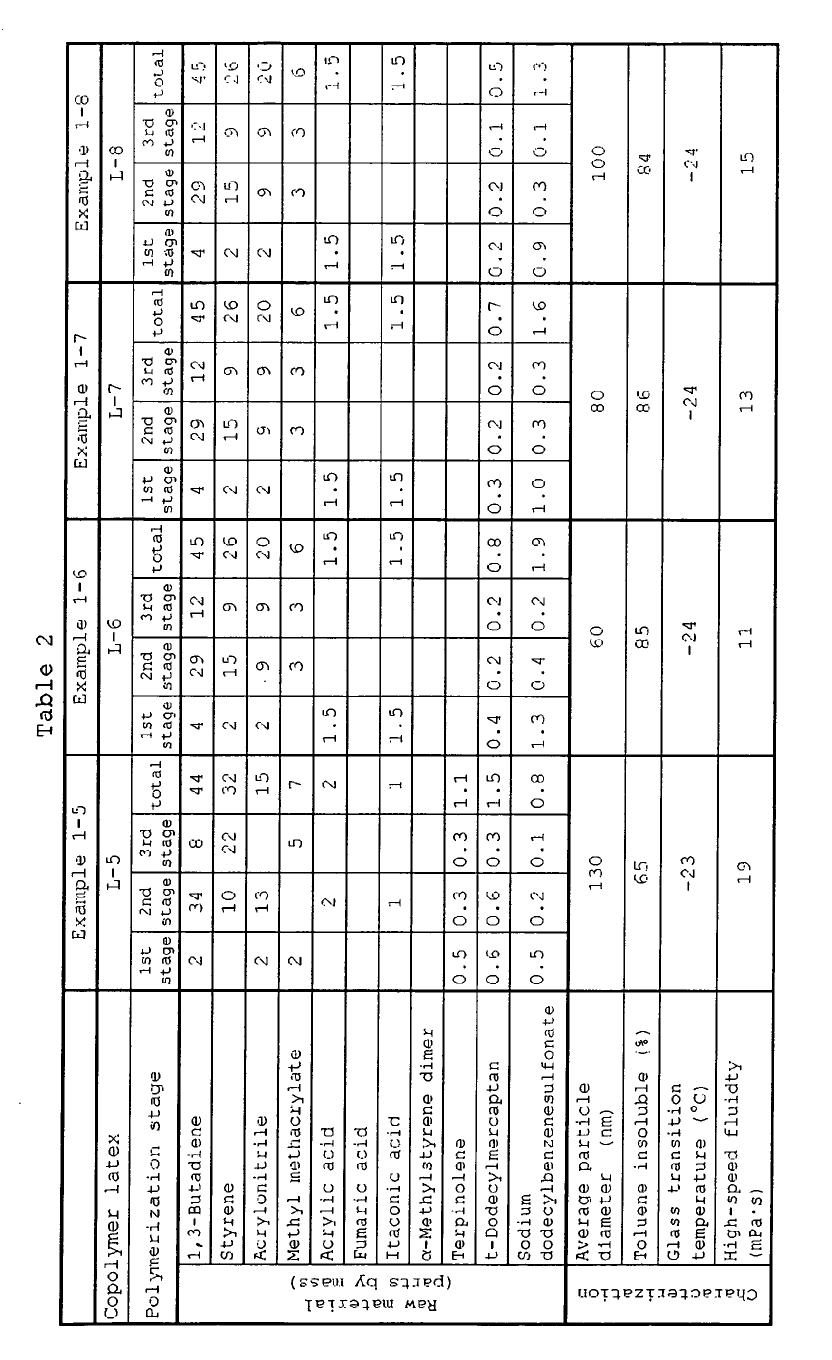

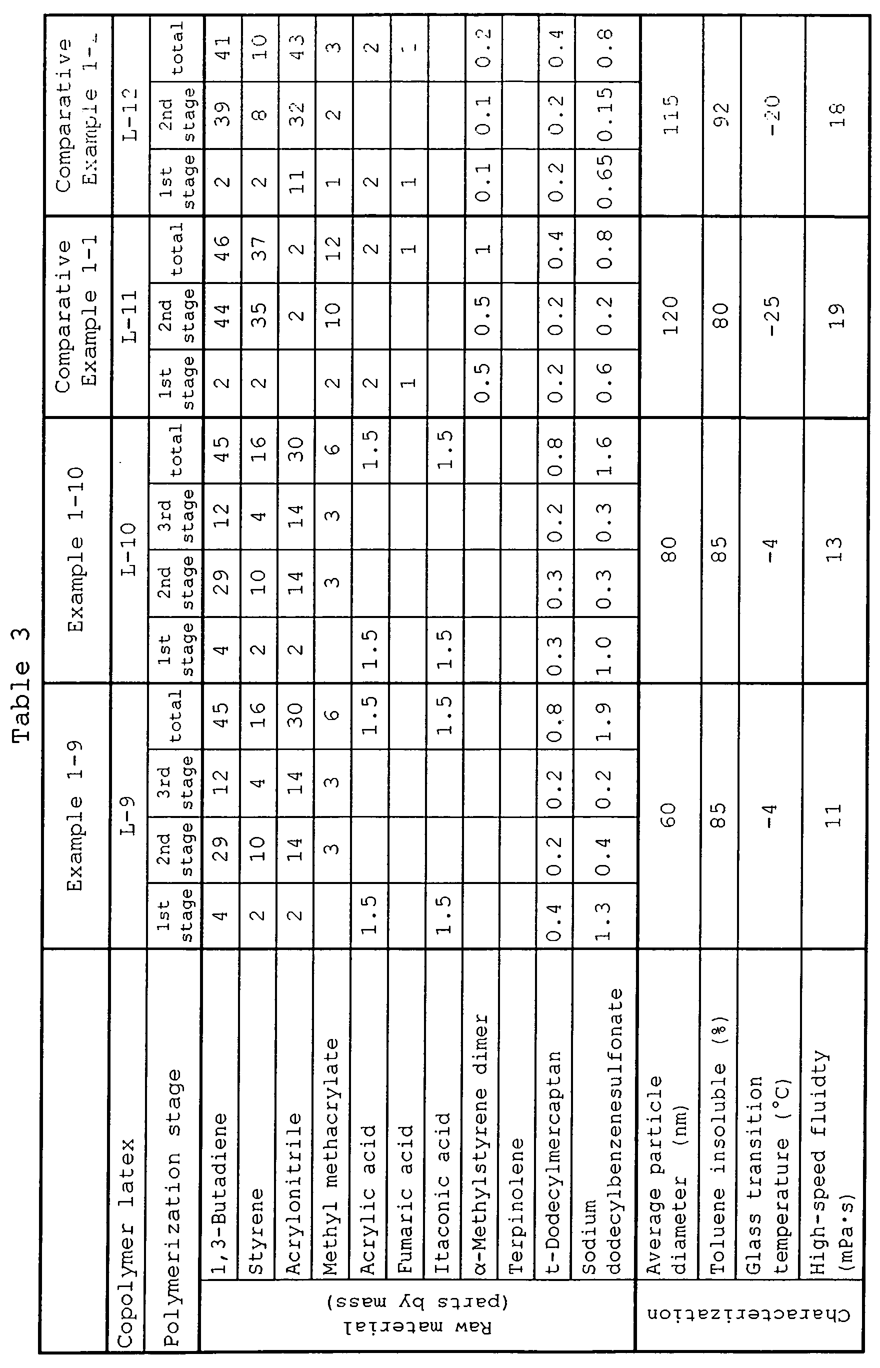

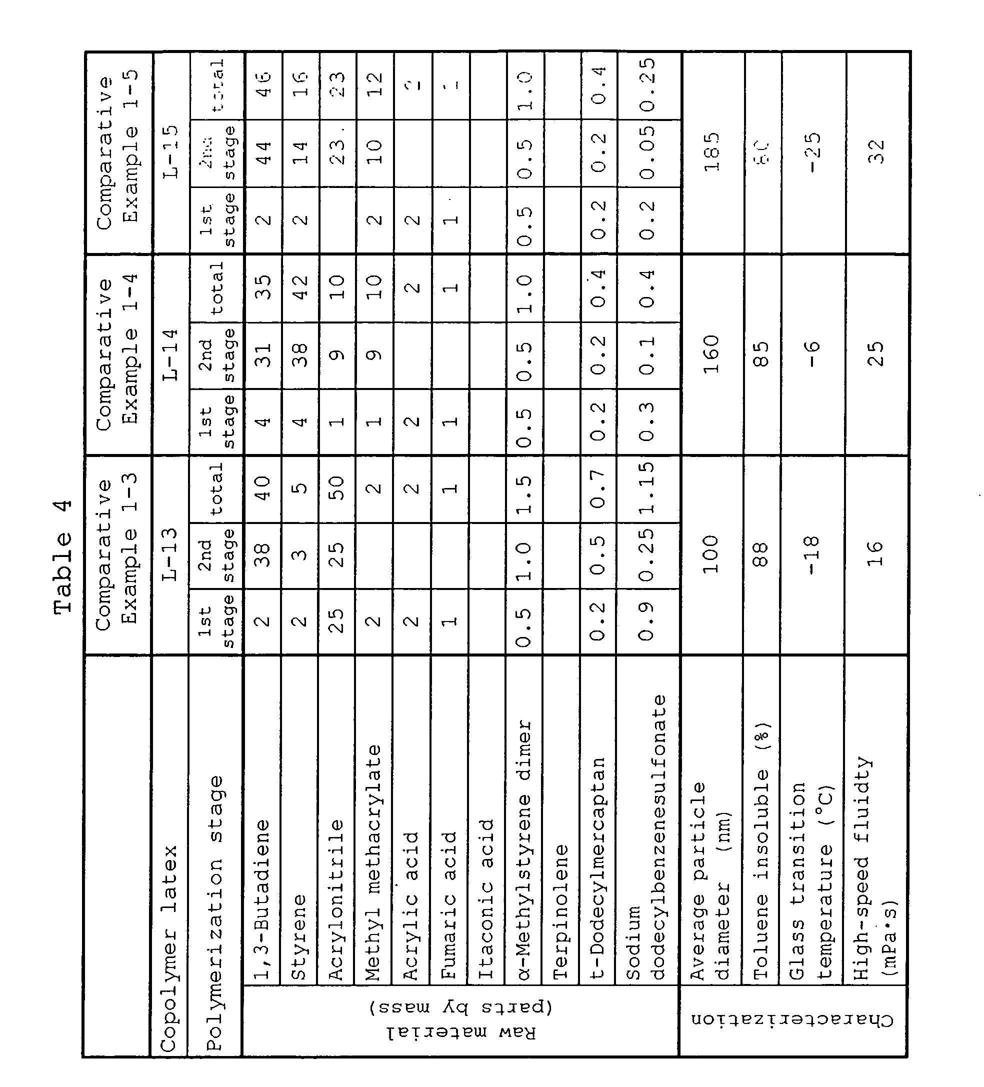

### 1-2. Preparation of Coating Composition for Paper

Coating compositions for paper for offset printing paper CP-1 to CP-15 for curtain coating were prepared in the formulation shown in Table 5 with the copolymer latices L-1 to L-15 produced in Examples 1-1 to 1-10 and Comparative Examples 1-1 to 1-5 and the following components (1) to (5).
(1) Kaolin clay
   "Ultrawhite 90", a trade name, produced by Engelhard Corp.
(2) Calcium carbonate
   "Fimatec 90", a trade name, produced by Fimatec Ltd.
(3) Dispersing agent
   Polyacrylic acid-based dispersing agent, "Aron T-40", a trade name, produced by Toagosei Co., Ltd.
(4) Sodium hydroxide
   "Sodium Hydroxide, high grade", a trade name, produced by Wako Pure Chemical Industries, Ltd.
(5) Starch
   "MS4600", a trade name, produced by Nisshoku Co.

**Table 5**

| Constituent of coating composition for paper | |
|---|---|
| Kaolin Clay | 70.0 parts |
| Calcium carbonate | 30.0 |
| Dispersing agent | 0.2 |
| Sodium hydroxide | 0.1 |
| Starch | 4.0 |
| Copolymer latex (solids content) | 13.0 |
| Total solids content | 45%^{*1} |

| | |
|---|---|
| *1 It was adjusted by adding water. | |

### 1-3. Production and Evaluation of Coated Paper

A coating operation was carried out by using the coating compositions for paper CP-1 to CP-15 obtained in the foregoing with a curtain coater and a spray, and various evaluation were effected.

### Example 1-11

The coating composition for paper CP-1 was coated on base paper (64 g/m²) to a coated weight of 10.0 ±0.5 g/m² per one surface with a laboratory curtain coater, produced by SMT, Inc., at a coating speed of 30 m/min, and then dried with a hot air drier at 150°C for 20 seconds, so as to obtain coated paper (A1). Thereafter, the coated paper (A1) was allowed to stand in a constant temperature and humidity bath at a temperature of 28°C and a humidity of 50% over one day. The coated paper (A1) was subjected four times to a super calender treatment under conditions of a linear pressure of 100 kg/cm and a roll temperature of 50°C to obtain coated offset printing paper. The resulting coated offset printing paper was evaluated for the dry pick strength, the wet pick strength, the printing gloss, the color fading property of the coated paper, and the runnability upon production in the following manner.

### (1) Dry Pick Strength

The extent of picking upon printing with an RI printer (produced by Akira Seisakusho Co., Ltd.) was determined by the naked eye and evaluated by five grades. A sample suffering less picking was given with a high score. The measurement value was an average value of measurements in six times.

### (2) Wet Pick Strength

The surface of the coated paper was wetted with a water pickup roll by using the aforementioned RI printer, and then the extent of picking upon printing with the RI printer was determined by the naked eye and evaluated by five grades. A sample suffering less picking was given with a high score. The measurement value was an average value of measurements in six times.

### (3) Printing Gloss

An offset ink was printed on the coated paper solidly by using the RI printer, and then the glossiness was measured with a Murakami gloss meter at an angle of 60°.

### (4) Color Fading Property

The coated paper was subjected to color fading according to JAPAN TAPPI No. 21 by using a Gear aging tester, and the color fading property was evaluated with a difference (ΔYI) between the YI value before the test and the YI value after the test of the coated paper measured with SM Color Computer, produced by Suga Test Instruments Co., Ltd.

### (5) Runnability

The coating composition for paper was circulated through a head of a laboratory curtain coater for 1 hour. A sample that clogged the slit during the circulation was designated as grade "×", a sample that did not clogged but disturbed the flow from the slit, i.e., the curtain film of the coating composition was designated as grade "Δ", and a sample that caused no problem was designated as grade "○".

The coating composition for paper CP-1 was diluted to have a viscosity of 100 mPa·s and spray-coated on the base paper to a coated weight of 10.0 ±0.5 g/m² per one surface. Thereafter, the coated layer was dried with a hot air drier at 150°C for 20 seconds, as similarly to the case of the curtain coater, to obtain coated paper (A2). Thereafter, the coated paper (A2) was allowed to stand in a constant temperature and humidity bath at a temperature of 23°C and a humidity of 50% over one day and night, and then subjected four times to a super calender treatment under conditions of a linear pressure of 100 kg/cm and a roll temperature of 50°C to obtain coated offset printing paper. The resulting coated offset printing paper was evaluated in the same manner as in the foregoing. The results obtained are shown in Table 6.

### Examples 1-12 to 1-20 and Comparative Examples 1-2 to 1-5

Offset printing paper was obtained in the same manner as in Example 1-11 by using the coating compositions for paper CP-2 to CP-15 and then evaluated. The results obtained are shown in Tables 6 and 7.

### 1-4. Effect of Examples

The copolymer latex L-11 produced in Comparative Example 1 was in the case where the amount of the used vinyl cyanide compound was less than 5 parts, and when the coating composition for paper CP-11 obtained by using L-11 was coated, excessive ink absorption to the coated layer of the coated paper occurred. As a result, it was apparent that the printing gloss was unfavorably low (see Table 7). The copolymer latices L-12 and L-13 produced in Comparative Examples 1-2 and 1-3 were in the case where the amount of the used vinyl cyanide compound was 40 parts or more, and when the coating compositions for paper CP-12 and CP-13 obtained by using L-12 and L-13 were coated, it was not preferred since the coated paper suffered extreme decrease in water resistant strength, and the brightness was considerably decreased to result in deteriorated color fading property.

The copolymer latices produced in Comparative Examples 1-4 and 1-5 were in the case where the average particle diameter exceeded 150 nm, and good runnability could not be obtained due to poor high-speed flowability. The printing gloss was not good due to excessive ink absorption to the coated layer of the coated paper.

On the other hand, the copolymer latices L-1 to L-10 produced in Examples 1-1 to 1-10 shown in Tables 1 to 3 sufficiently exerted the objects of the present invention. That is, because these were latices excellent in high-speed flowability, Tables 6 to 7 showed that the runnability using the coating compositions for paper CP-1 to CP-10 produced by using the latices, respectively, was good, and coated paper excellent in dry pick strength, wet pick strength and printing gloss was obtained.

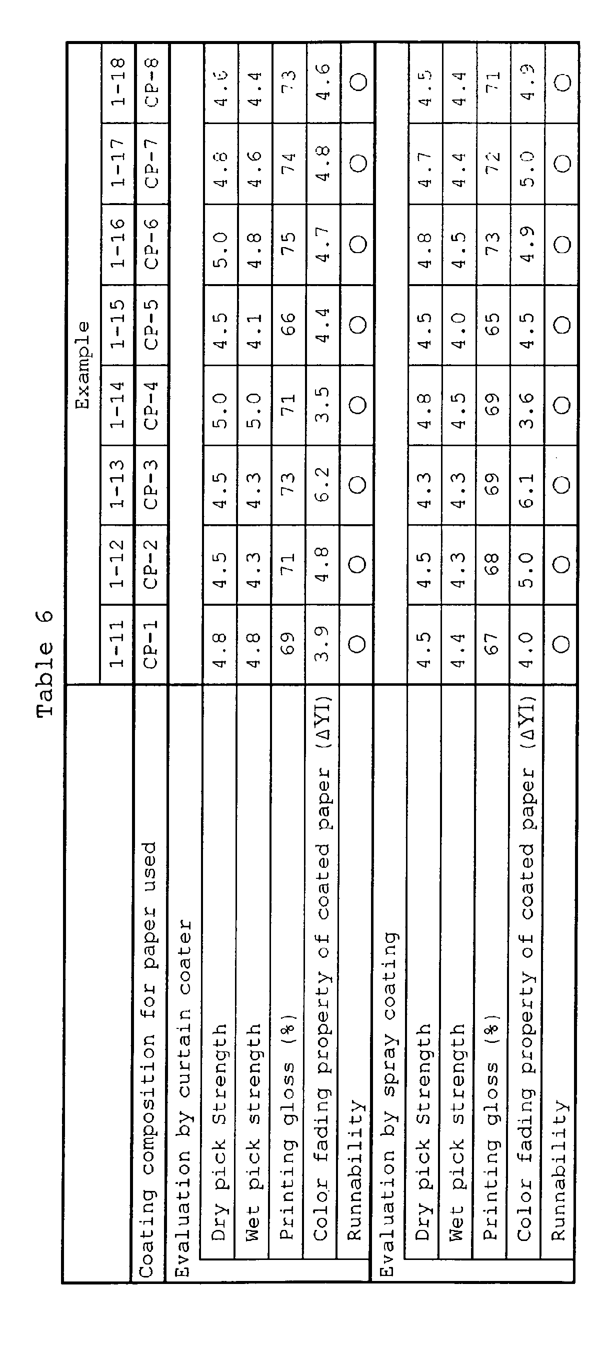

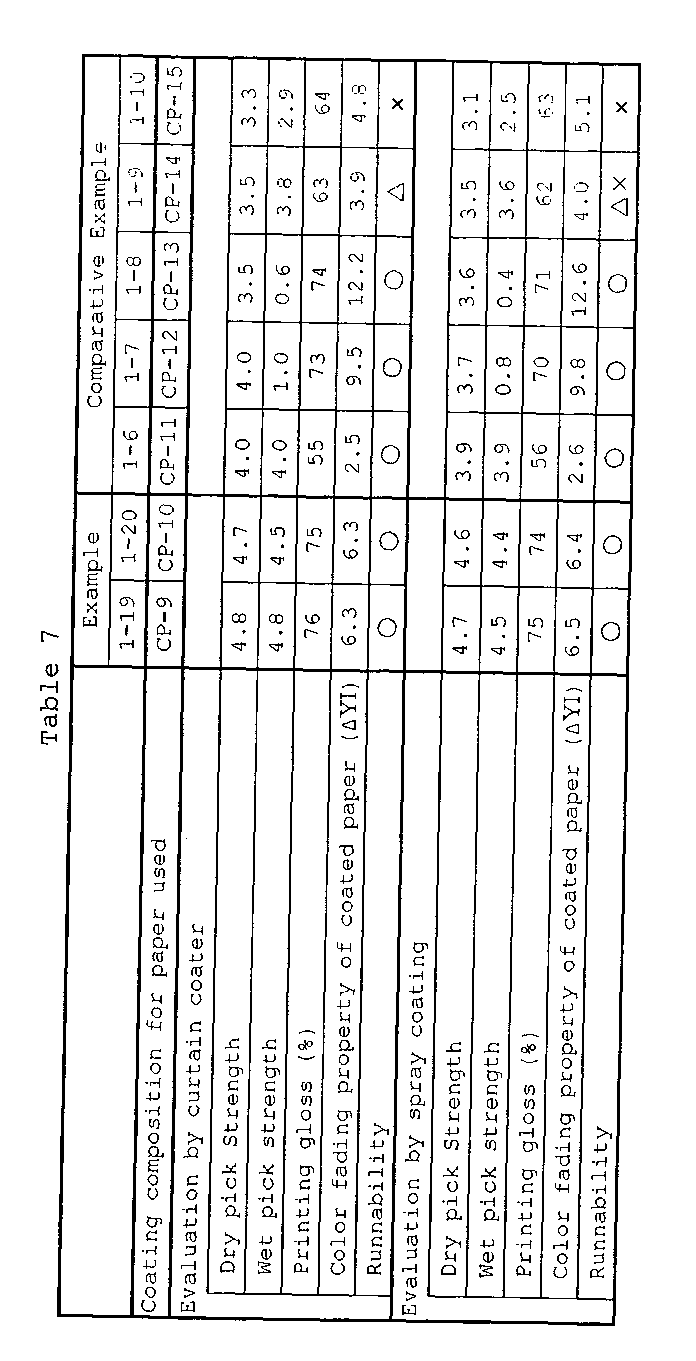

### 2. Example [II]

### 2-1. Production of Copolymer Latex

### Example 2-1

200 parts of water, 0.5 part of sodium dodecylbenzenesulfonate, 1.0 part of potassium persulfate and 0.5 part of sodium bisulfite and the components for the first step (the monomer components for forming the copolymer part (P1)) shown in Table 8, i.e., 25 parts of 1,3-butadiene, 5 parts of styrene and 0.2 part of t-dodecylmercaptan, were charged at a time in an autoclave having a stirrer equipped, the temperature of which could be controlled, and reacted at 45°C for 6 hours. It was confirmed that the polymerization conversion was 70% or more (the first step polymerization). Thereafter, the components for the second step (the monomer components for forming the copolymer part (P2)) shown in Table 8 were continuously added, during which the polymerization was continued at 60°C for 7 hours. After completing the continuous addition, the reaction was further effected (the second step polymerization) at 60°C for 7 hours to obtain a copolymer latex L-16 containing particles formed of a copolymer. The final polymerization conversion was 99%. The resulting copolymer latex L-16 was measured for the average particle diameter, the glass transition point and the toluene insoluble content of the polymer particles, and the weight average molecular weight and the cohesiveness of the copolymer part (P1) in the following manner. The results obtained are shown in Table 8.

### (1) Average Particle Diameter

The average particle diameter of the polymer particles was obtained by the ordinary manner using a submicron analyzer "Model N4", produced by Beckman Coulter, Inc.

### (2) Glass Transition Point

It was measured in the manner shown in Example [I].

### (3) Toluene Insoluble Content

It was measured in the manner shown in Example [I].

### (4) Weight Average Molecular Weight

The polymerization of the copolymer part (P1) using the first step components was started in the same manner as in the aforementioned example, and at a time when the polymerization conversion reached 70%, 0.1 part of N,N-diethylhydroxylamine was added to terminate the polymerization. Thereafter, the unreacted monomers were removed by steam stripping. The reaction mixture was cooled to ordinary temperature, and the solids content thereof was adjusted to 25% by using distilled water. Thereafter, the copolymer part (P1) thus formed was aggregated with isopropanol. The aggregated product was washed and dried, and 0.3 g thereof was dissolved in 50 mL of tetrahydrofuran (THF). The solution was filtered with a membrane filter, and the filtrate was measured for the polystyrene conversion molecular weight with gel permeation chromatography (GPC).

### (5) Cohesiveness

The copolymer latex was coated on a polyethylene terephthalate film with a No. 18 rod and dried at 120°C for 30 seconds to form a film of 10 g/m². Thereafter, the film was superimposed on black woolen cloth, and pressed with bench super calender under conditions of a linear pressure of 200 kg/m and a temperature of 70°C. They were peeled off from each other, and the extent of transfer of the polymer film to the black woolen cloth was visually evaluated by five grades. A sample suffering less transfer was given with a high score. The measurement value was an average value of measurements in six times.

### Examples 2-2 to 2-5

Copolymer Latices L-17 to L-20 were produced in the same manner as in Example 2-1 except that the raw materials shown in Table 8 were used, and were evaluated in the same manner as in the foregoing. The final polymerization conversion was from 98 to 99.5%. The results obtained are shown in Table 8.

### Comparative Examples 2-1 to 2-4

Copolymer Latices L-21 to L-24 were produced in the same manner as in Example 2-1 except that the raw materials shown in Table 9 were used, and were evaluated in the same manner as in the foregoing. The final polymerization conversion was from 98 to 99%. The results obtained are shown in Table 9.

### 2-2. Preparation of Coating Composition for Paper

Coating compositions for paper for offset printing paper CP-16 to CP-24 for curtain coating were prepared in the formulation shown in Table 5 with the copolymer latices L-16 to L-24 produced in Examples 2-1 to 2-5 and Comparative Examples 2-1 to 2-4 and the kaolin clay, the calcium carbonate, the dispersing agent, the sodium hydroxide and the starch, which were used in Example [I].

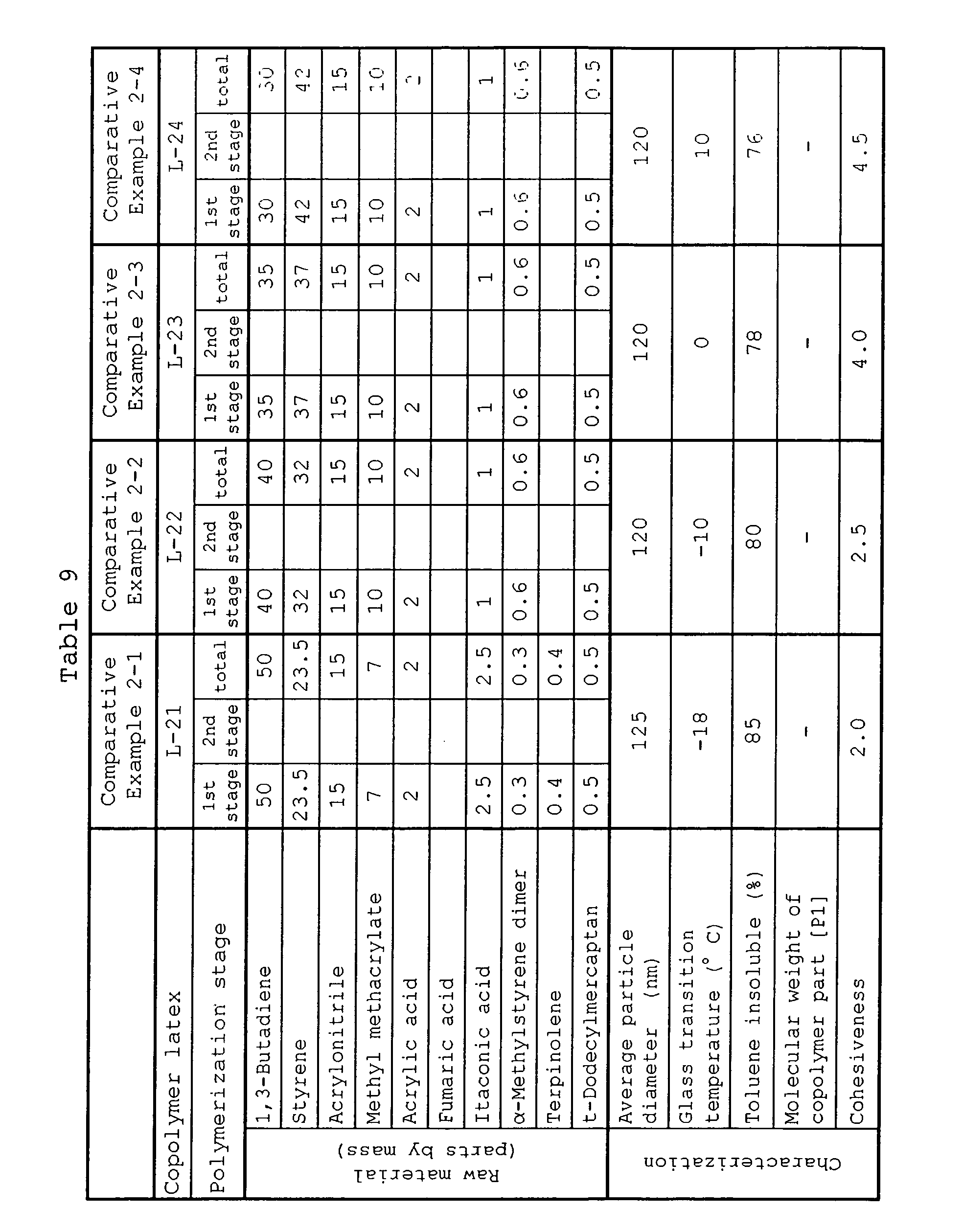

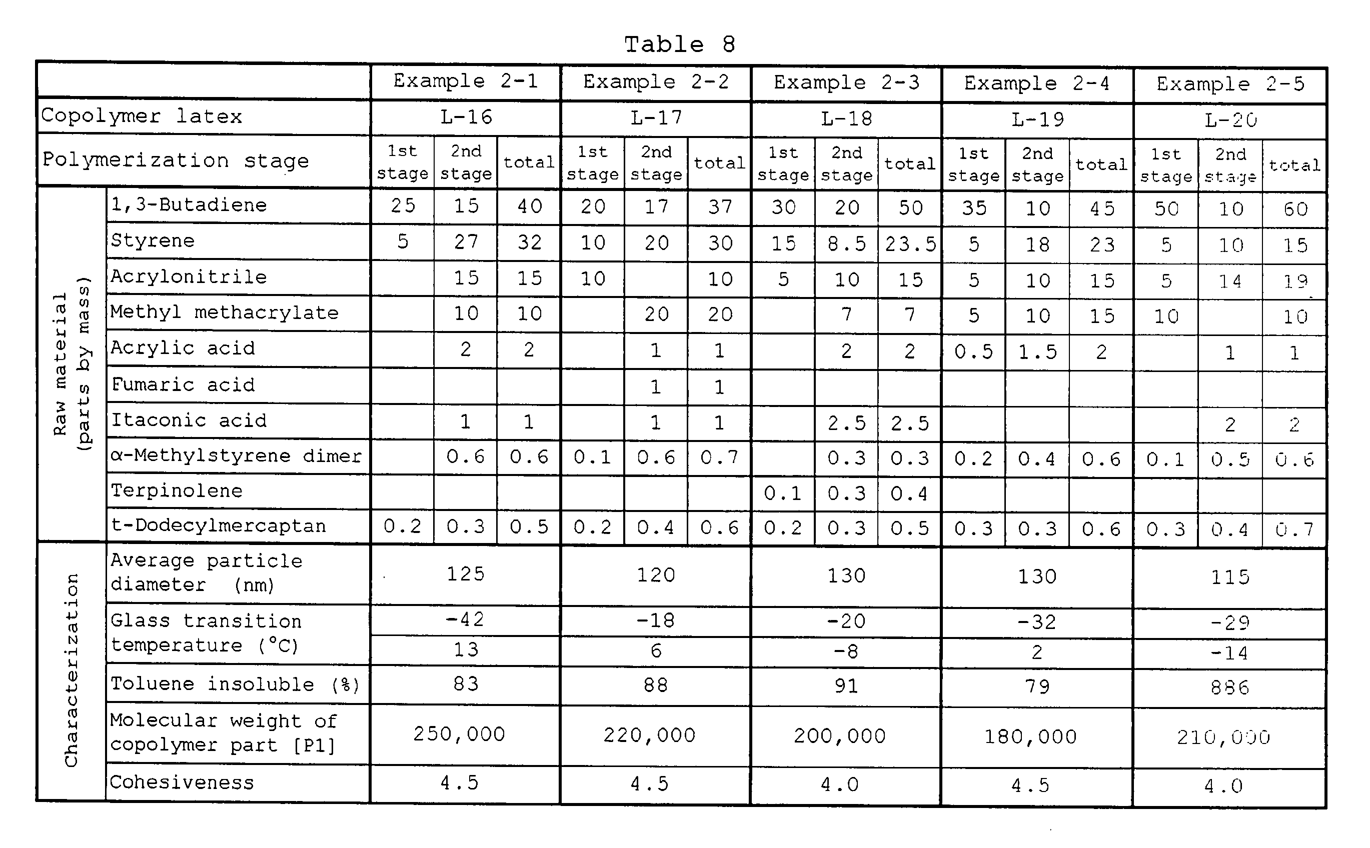

### 2-3. Production and Evaluation of Coated Paper

A coating operation was carried out by using the coating compositions for paper CP-16 to CP-24 obtained in the foregoing with a curtain coater, a spray and a blade coater, and various evaluation were effected.

### Example 2-6

The coating composition for paper CP-16 was coated on the base paper described in Example [I] to a coated weight of 10.0 ±0.5 g/m² per one surface with a laboratory curtain coater, and then dried with a hot air drier at 150°C for 20 seconds, so as to obtain coated paper (B1). Thereafter, the coated paper (B1) was allowed to stand in a constant temperature and humidity bath at a temperature of 23°C and a humidity of 50% over one day and night. The coated paper (B1) was subjected four times to a super calender treatment under conditions of a linear pressure of 100 kg/cm and a roll temperature of 50°C to obtain coated offset printing paper. The resulting coated offset printing paper was evaluated for the dry pick strength, the wet pick strength, the printing gloss, and the runnability upon production in the same manner as in Example [I]. The results obtained are shown in Tale 10.

The coating composition for paper CP-16 was diluted to have a viscosity of 100 mPa·s and spray-coated on the base paper to a coated weight of 10.0 ±0.5 g/m² per one surface. Thereafter, coated paper (B2) was obtained in the same manner as in Example [I]. The coated paper (B2) was then processed in the same manner as in the case using a curtain coater to obtain coated offset printing paper.

The resulting coated offset printing paper was evaluated in the same manner as in the foregoing. The runnability was evaluated by observing as to whether or not the nozzle was clogged upon spraying, and as to whether or not the spraying operation could be normally effected. The results obtained are shown in Table 10.

### Examples 2-7 to 2-10 and Comparative Examples 2-5 to 2-8

Coated paper was obtained in the same manner as in Example 2-6 except that the coating compositions for paper CP-17 to CP-24 were used, and then evaluated in the same manner as in the foregoing. Evaluation by blade coating was also effected for Examples 2-7 and 2-9 and Comparative Examples 2-1 and 2-3. The blade coating was effected by using a laboratory sheet coating machine at a coating speed of 30 m/min. The drying operation and the subsequent operations were the same as in the case of curtain coating. The runnability was evaluated by contamination of the backing roll. The evaluation of the contamination of the backing roll was carried out by comparing in terms of the evaluation of cohesiveness with the latex that had caused contamination on blade coating and the latex that had not caused contamination thereon. A sample that was expected to cause contamination was designated as grade "×", a sample that was expected to cause no contamination was designated as grade "○", and a sample showing an intermediate result was designated as grade "Δ". The results obtained are shown in Table 10.

The coated offset printing paper obtained with the curtain coater and the blade coater was also evaluated for covering property by the burnout method. The evaluation method was as follows. Ammonium chloride was dissolved in a medium obtained by mixing isopropyl alcohol and water as 1/1 to prepare an aqueous solution having a concentration of 2.5%. The aqueous solution was sprayed on the surface of the coated paper, which was then placed in a Gear oven and allowed to stand at 200°C for 10 minutes, and the brightness thereof was measured. A sample exhibiting high brightness and good covering property was designated as grade "○", a sample exhibiting low brightness and poor covering property was designated as grade "×", and a sample showing an intermediate result was designated as grade "Δ".

### 2-4. Effect of Examples

It was understood from Table 10 that in Examples 2-6 to 2-10, coated paper having high covering property was obtained through production by the curtain coating method and the spray coating method by using the coating compositions for paper CP-16 to CP-20 containing the copolymer latices L-16 to L-20 produced in Examples 2-1 to 2-5, and thus coated paper having large dry pick strength and wet pick strength, good printing gloss, and low cohesiveness of the latex was obtained. The runnability upon production was good. In the production by the blade coating method, the covering property was not sufficient even when the aforementioned coating compositions for paper were used, as apparent from Example 2-7 and 2-9.

On the other hand, Comparative Examples 2-5 to 2-8 resulted in poor results for one of or plural items of the dry pick strength, the wet pick strength, the printing gloss and the runnability regardless of coating method.

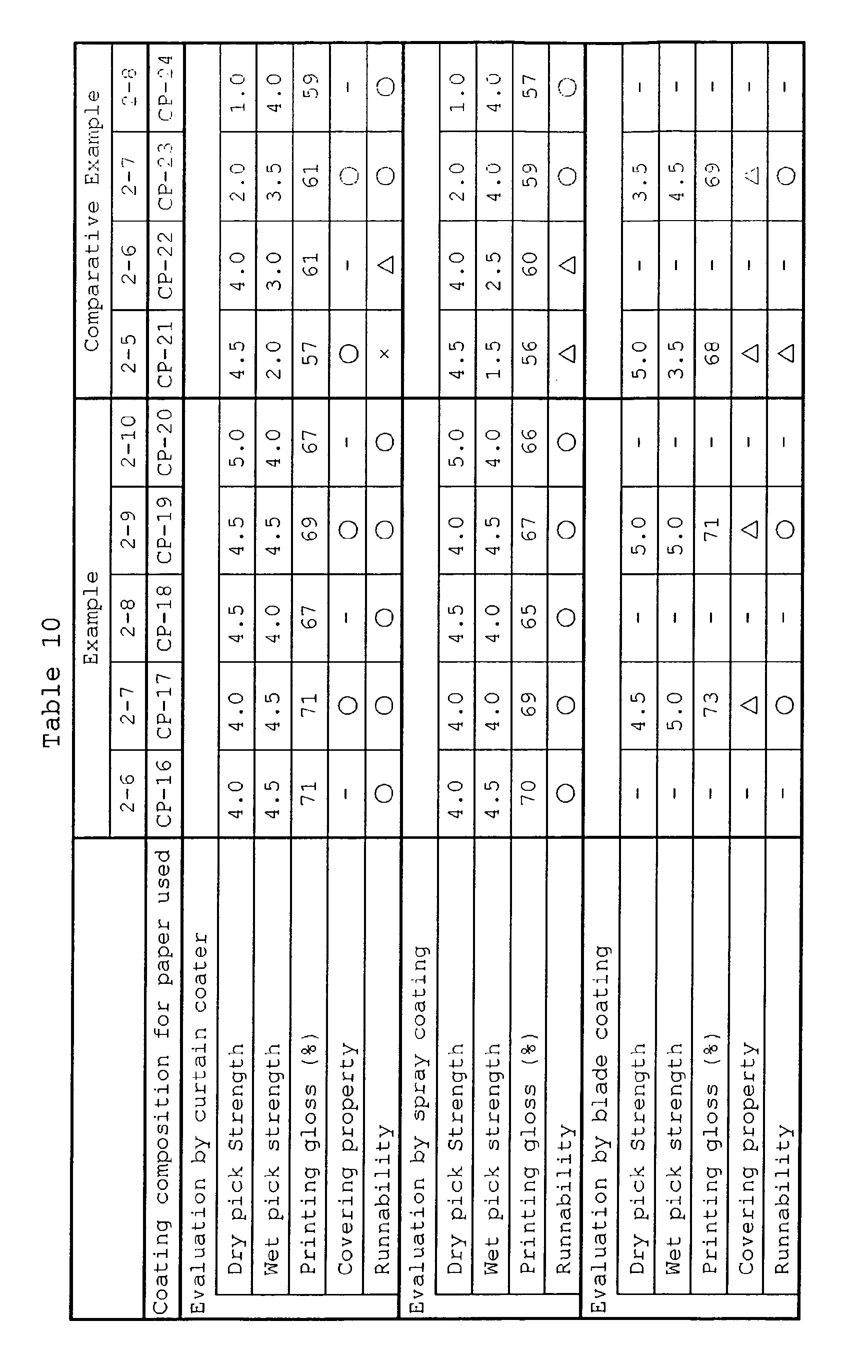

### 3. Example [III}

### 3-1. Production of Copolymer Latex

### Production Example 3-1

200 parts of water and 1 part of potassium persulfate were charged in an autoclave having a stirrer equipped, the temperature of which could be controlled, and then the components for the first step shown in Table 11 were charged at a time and reacted at 60°C for 1 hour. Thereafter, the components for the second step shown in Table 11 were continuously added at a rate of 10 parts/hour to continue the polymerization. The components for the third step shown in Table 11 were then continuously added at a rate of 10 parts/hour to continue further the polymerization. After completing the addition of the components for the third step, the reaction was further effected at 70°C for 6 hours to obtain a copolymer latex L-25. The resulting copolymer latex L-25 was measured for the average particle diameter of the polymer particles, the glass transition point and the toluene insoluble content. The results obtained are shown in Table 11. The average particle diameter was obtained by the ordinary manner using a laser light scattering particle diameter measuring apparatus "LPA-3100 PAR-3", produced by Otsuka Electronics Co., Ltd. The glass transition point was obtained by the ordinary manner using a differential scanning thermal analyzer (DSC) "EXTAR6000", produced by Seiko Instruments, Inc.

The toluene insoluble content was measured in the same manner as shown in Example [I].

### Production Examples 3-2 to 3-5

Copolymer Latices L-26 to L-29 were produced in the same manner as in Production Example 3-1 except that the raw materials shown in Tables 11 to 12 were used. The final polymerization conversions of the latices were from 98%. The latices were evaluated in the same manner as in the foregoing. The results obtained are shown in Tables 11 and 12.

### 3-2. Preparation of Coating Compositions for Paper

### Example 3-1

Coating composition for paper CP-25 was prepared in the formulation shown in Table 13 with the copolymer latex L-25 produced in Example 3-1 and the following components (1) to (6) by adding the pigment, the latex, the viscosity adjusting agent (thickener) and the wetting agent in this order, followed by mixing.

### (1) Fine particle clay (pc1)

"Amazon SD", a trade name, produced by Cadam Caulim Da Amazonia, Brazil, containing a component having a particle diameter of less than 2 µm in an amount of about 90% or more

### (2) High aspect clay (pc2)

"Century HC", a trade name, produced by Para Pigment Company, Brazil, containing a component having a particle diameter of less than 2 µm in an amount of about 90%

### (3) Calcium carbonate

"Carbital 90", a trade name, produced by Shiroishi Calcium Kaisha Ltd.

### (4) Hollow polymer particles

"AE851", a trade name, produced by JSR Corp., a latex containing hollow polymer particles, the mixing amounts thereof shown in Tables 13 and 14 being in terms of solids content

### (5) Wetting agent

"SN929S", a trade name, produced by San Nopco Ltd.

### (6) Viscosity adjusting agent (thickener)

"SN980", a trade name, produced by San Nopco Ltd.

The coating composition for paper CP-25 was measured for the viscosity, the dynamic surface tension and the static surface tension in the following manner. The results obtained are shown in Table 13.

### (a) Viscosity

The coating composition for paper was controlled for 2 hours in a water bath adjusted to 25°C, and after confirming that the temperature was sufficiently constant, the apparent viscosity was measured with a viscometer ("Digital Viscometer DV Model M-BII", a trade name), produced by Tokimec, Inc., at 60 rotations after 1 minute from the start of measurement.

### (b) Dynamic Surface Tension

The coating composition for paper was measured with a dynamic surface tensitometer (Model "BP-2"), produced by Kruss GmBH with an interval of 10 points per decade within a surface lifetime range from 30 to 1,000 ms, and the data for 15 to 20 points were expressed by a graph. The dynamic surface tension at a surface lifetime of 10 ms was obtained by extrapolation of the graph by the least square method.

### (c) Static Surface Tension

The static surface tension was measured by using a Dunuey surface tensitometer at 20°C.

### Examples 3-2 to 3-5 and Comparative Examples 3-1 to 3-5

Coating compositions for paper CP-26 to CP-34 were prepared in the formulations shown in Tables 13 and 14 with the copolymer latices L-26 to L-29 produced in Production Examples 3-2 to 3-5 and the aforementioned components (1) to (6) in the same manner as in Example 3-1. The compositions were evaluated for physical properties in the same manner as in the foregoing. The results obtained are shown in Tables 13 and 14.

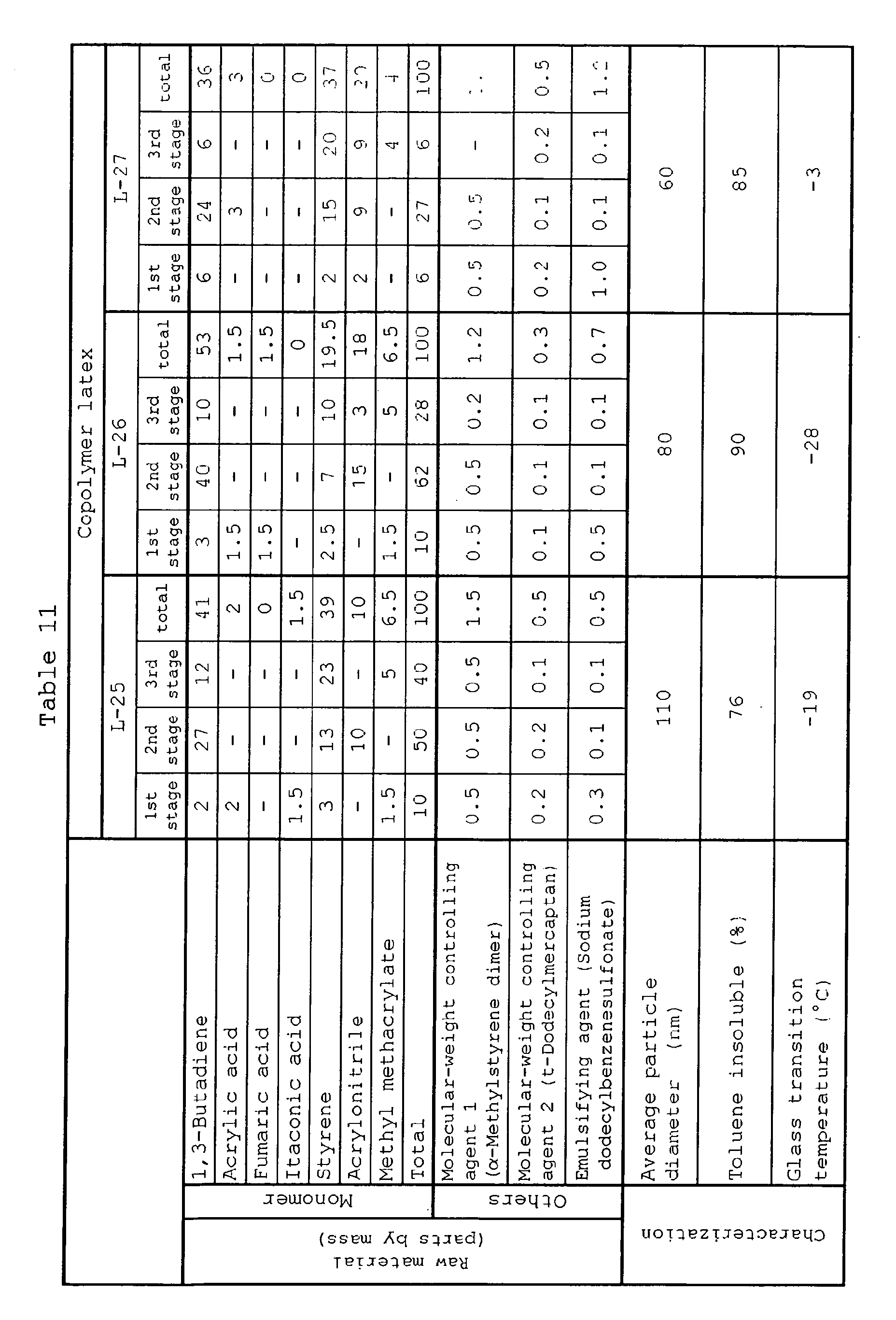

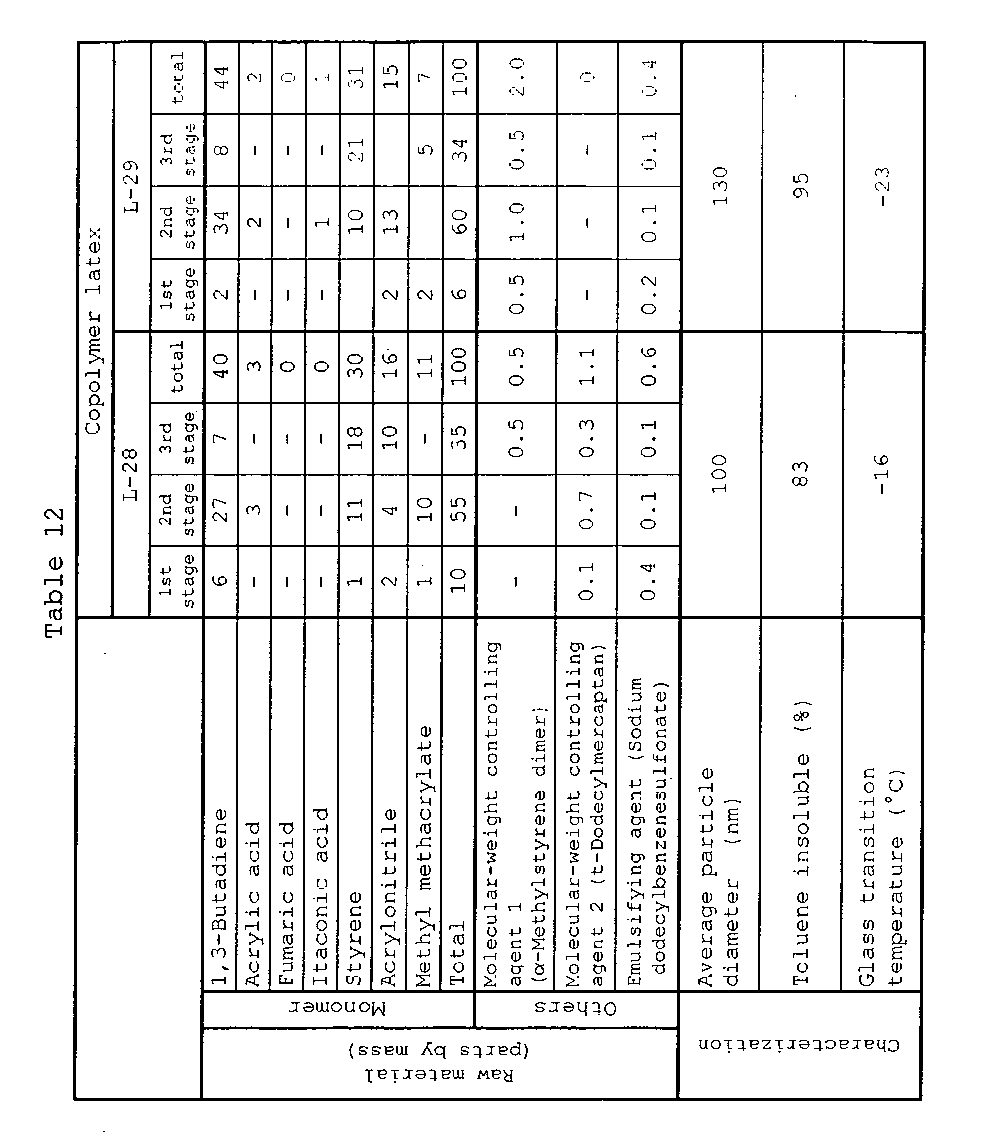

### 3-3. Production of Coated Paper

The coating compositions for paper CP-25 to CP-34 (Examples 3-1 to 3-5 and Comparative Examples 3-1 to 3-5) were adjusted to have the solid concentrations shown in Tables 13 and 14 and coated on base paper ("GraphoSet", a trade name, produced by Mitsubishi Paper Sales Co., Ltd.) to a coated weight of 8.0 ±0.5 g/m² by using a pilot curtain coater, produced by IHI, Ltd., to obtain coated paper (C). At this time, the coating speed was gradually increased at an interval of 200 m/min, and the maximum speed, at which puddling did not occur, was measured. The maximum coating speeds thus measured and the coated weights per one surface are shown in Tables 13 and 14.

Thereafter, the coated paper (C) was allowed to stand in a constant temperature and humidity bath at a temperature of 23°C and a humidity of 50% over one day and night. The coated paper (C) was subjected four times to a super calender treatment under conditions of a linear pressure of 100 kg/cm and a roll temperature of 50°C to obtain coated paper. The resulting coated paper was evaluated for the following coating defects, the dry pick strength, the wet pick strength, the paper gloss and the printing gloss. The results obtained are shown in Tables 13 and 14.

### (d) Coating Defects (burnout method)

The coated paper was immersed in a mixed solution obtained by mixing a 5% ammonium chloride aqueous solution and isopropanol at a ratio of 50/50 and heated to 200°C for 3 minutes to color the fibers. One arbitrary site on the surface of the coated paper thus colored was selected, and the site was observed with an optical microscope at a magnification of 50. The coating defects detected in each of the view fields were evaluated by the following grades "○", "Δ" and "×".
"○":No coating defect was found.
"Δ":Large coating defects having a diameter of 0.05 mm or more could be found, and/or relatively small coating defects having a diameter of from 0.01 to 0.05 mm were occasionally found.
"×":Large coating defects having a diameter of 0.05 mm or more was occasionally found, and/or many relatively small coating defects having a diameter of from 0.01 to 0.05 mm were found.

### (e) Dry Pick Strength

A picking test ink was printed by using a printer RI-II, produced by Akira Seisakusho Co., Ltd., and the extent of picking (such a phenomenon that the surface of the coated paper was partly peeled off due to tacking of the ink) upon printing was evaluated by the naked eye to the following five-grade standard (with intermediate values thereof). The measurement was carried out in six times for each of the coated paper, and the average value of the evaluated values was calculated for the respective printing operations.
1: No picking occurred.
2: Picking was occasionally found.
3: Picking was dominantly found (but the picking area did not reach the half).
4: The picking area reached the half.
5: The evaluation could not be effected (due to breakage or the like).

### (f) Wet Pick Strength

By using a printer RI-I, produced by Akira Seisakusho Co., Ltd., the surface of the coated paper was wetted with a first stage roll having water-wetted cloth wound thereon (Moulton roll), and then printed with a second stage roll attached with a picking test ink under the same conditions as in the aforementioned (e). Thereafter, the extent of picking was evaluated in the same standard as in the aforementioned (e). The measurement was carried out in six times for each of the coated paper, and the average value of the evaluated values was calculated for the respective printing operations.

### (g) Paper gloss

The surface of the non-printed coated paper was measured for glossiness with a Murakami gloss meter at an incident angle of 75° and a reflection angle of 75°. The measurement was carried out in six times, and the average value was calculated from the resulting glossiness values. The larger the glossiness value is, the better the result is.

### (h) Printing Gloss

An offset ink was printed solidly on the surface of the coated paper by using the aforementioned printer RI-I. The glossiness on the surface of the resulting printed paper was measured in the same manner as in the aforementioned (g) except that the incident angle was 60° and the reflection angle was 60°. The measurement was carried out in six times, and the average value was calculated from the resulting glossiness values. The larger the glossiness value is, the better the result is.

### 3-4. Effect of Examples

It was understood from the results shown in Tables 13 and 14 that the coating compositions for paper of Comparative Examples 3-1 and 3-2 were the same as Example 3-1 in the mixed components and the mixed amounts except that the mixed amount of the viscosity adjusting agent (D) added for increasing the viscosity was larger than that in Example 3-1. However, the viscosity of the coating composition for paper of Comparative Example 3-1 was 2,200 mPa·s, and the viscosity of the coating composition for paper of Comparative Example 3-2 was 1,600 mPa·s, which exceeded 1,500 mPa·s. Accordingly, puddling occurred in Comparative Example 3-1 when the coating speed exceeded 200 m/min, and puddling occurred in Comparative Example 3-2 when the coating speed exceeded 1,400 m/min. Coating defects were confirmed in the coated paper obtained at the maximum coating speed, and it was understood that the dry pick strength was inferior as from 33 to 76% of that of Example 3-1, and the wet pick strength was inferior as from 58 to 77% of that of Example 3-1. It was understood that the paper gloss was inferior as 79% of that of Example 3-1 while the printing gloss was relatively good.

The coating composition for paper of Comparative Example 3-3 was the same as Example 3-1 in the mixed components and the mixed amounts except that the viscosity adjusting agent (D) was not added for decreasing the viscosity. However, the viscosity of the coating composition for paper of Comparative Example 3-3 was 40 mPa·s, which was less than 50 mPa·s, and accordingly, puddling occurred when the coating speed exceeded 300 m/min. No coating defect was found in the coated paper obtained at the maximum coating speed, and the wet pick strength was relatively good, but the dry pick strength was inferior as 22% of that of Example 3-1. It was understood that the paper gloss was inferior as 74% of that of Example 3-1, and the printing gloss was inferior as 86% of that of Example 3-1.

The coating composition for paper of Comparative Example 3-4 was the same as Example 3-1 in the mixed components and the mixed amounts except that the wetting agent (C) was not added for increasing the dynamic surface tension. However, the dynamic surface tension of the coating composition for paper of Comparative Example 3-4 was 68 mN/m, which exceeded 65 mN/m, and accordingly, puddling occurred when the coating speed exceeded 800 m/min. The coated paper obtained at the maximum coating speed was good in the strengths and was good in printing gloss, but was inferior in paper gloss as 80% of that of Example 3-1. Furthermore, coating defects were found.

The coating composition for paper of Comparative Example 3-5 was the same as Example 3-1 in the mixed components and the mixed amounts except that an excessive amount of the wetting agent (C) was added for decreasing the dynamic surface tension. However, the dynamic surface tension of the coating composition for paper of Comparative Example 3-5 was 20 mN/m, which was less than 25 mN/m, and accordingly, puddling occurred when the coating speed exceeded 400 m/min. The coated paper obtained at the maximum coating speed was good in the dry pick strength but was inferior in the wet pick strength as 70%. The paper gloss was inferior as 80% of that of Example 3-1, and the printing gloss was inferior as 89% of that of Example 3-1. Furthermore, coating defects were found.

In comparison to Comparative Examples 3-1 to 3-5, the coating composition for paper of Example 3-1 had a viscosity and a dynamic surface tension within the scope of the present invention, whereby the coating operation could be effected without occurrence of puddling at a high speed of 2,100 m/min even with a high solid concentration of 60%. No coating defect was found in the coated paper obtained at the maximum coating speed, and excellent values were obtained as 4.6 for the dry pick strength, 4.3 for the wet pick strength, 63 for the paper gloss, and 77.6 for the printing gloss.

In Example 3-2, a high-speed printing operation could be effected at 1,800 m/min, no coating defect was found in the coated paper obtained at the maximum coating speed, and excellent values were obtained as 4.4 for the dry pick strength, 3.9 for the wet pick strength, 68.5 for the paper gloss, and 76.5 for the printing gloss.

In Example 3-3, a high-speed printing operation could be effected at 2,000 m/min, no coating defect was found in the coated paper obtained at the maximum coating speed, and excellent values were obtained as 4.0 for the dry pick strength, 4.8 for the wet pick strength, 62.8 for the paper gloss, and 79.2 for the printing gloss.

In Example 3-4, a high-speed printing operation could be effected at 1,800 m/min, no coating defect was found in the coated paper obtained at the maximum coating speed, and excellent values were obtained as 4.5 for the dry pick strength, 4.0 for the wet pick strength, 64.5 for the paper gloss, and 80.4 for the printing gloss.

In Example 3-5, a high-speed printing operation could be effected at 2,100 m/min, no coating defect was found in the coated paper obtained at the maximum coating speed, and excellent values were obtained as 3.9 for the dry pick strength, 4.1 for the wet pick strength, 71.2 for the paper gloss, and 83.3 for the printing gloss.

Accordingly, in Examples 3-1 to 3-5 having physical properties within the scope of the present invention, a high-speed printing operation could be effected at from 1,800 to 2,100 m/min, and no coating defect occurred even in the high-speed printing operation, whereby it was understood that coated paper having various characteristics in a well balanced manner could be produced.

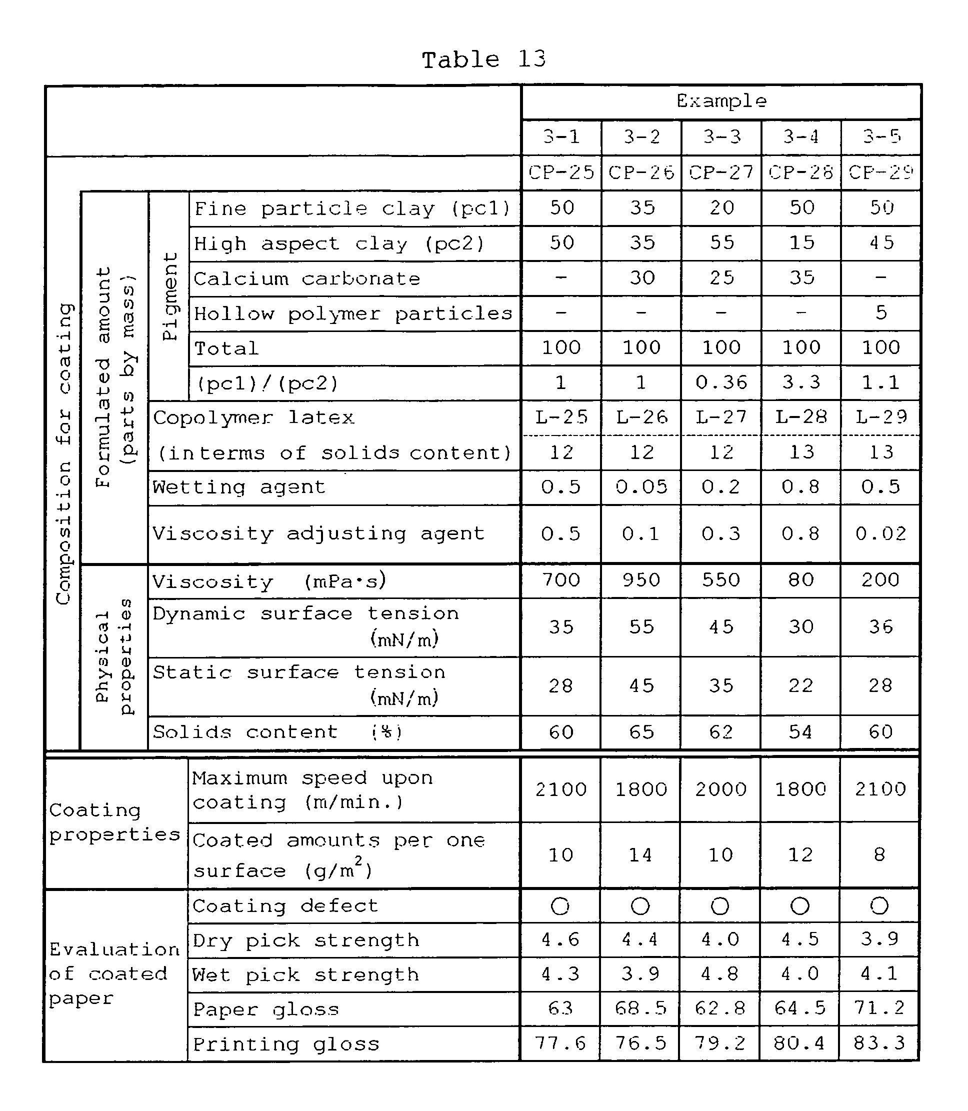

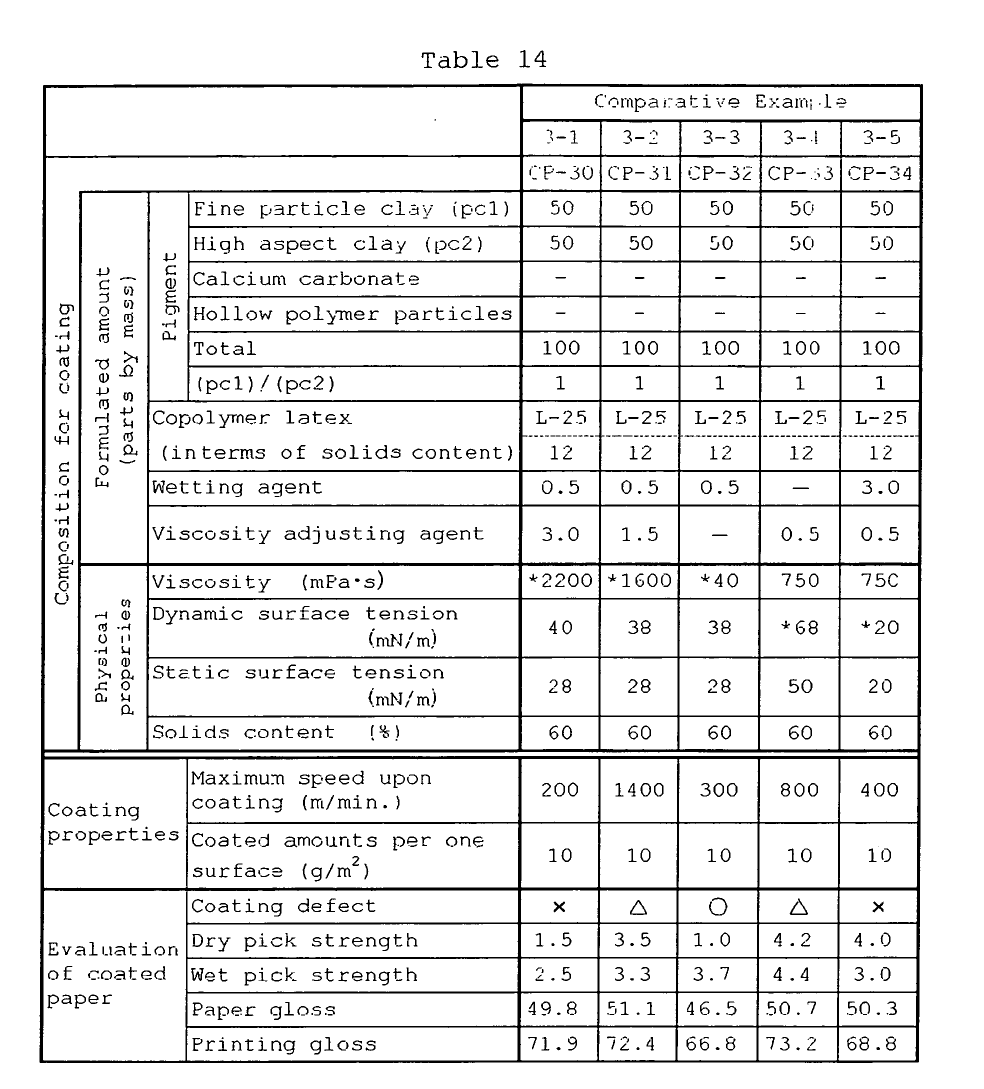

### 4. Example [IV]

### 4-1. Production of Copolymer Latex

### Production Example 4-1

200 parts of water and 1 part of potassium persulfate were charged in an autoclave having a stirrer equipped, the temperature of which could be controlled, and then the components for the first step shown in Table 15 were charged at a time and reacted at 60°C for 1 hour. Thereafter, the components for the second step shown in Table 15 were continuously added at a rate of 10 parts/hour, and the components for the third step shown in Table 15 were continuously added at the rate, to continue the polymerization. After completing the continuous addition, the reaction was further effected at 70°C for 6 hours to obtain a copolymer latex L-30. The final polymerization conversion was 98%. The resulting copolymer latex L-30 was measured for the average particle diameter of the polymer particles, the toluene insoluble content and the glass transition point, in the same manner as in Example [III]. The results obtained are shown in Table 15.

### Production Examples 4-2 to 4-5

Copolymer Latices L-31 to L-34 were produced in the same manner as in Production Example 4-1 except that the raw materials shown in Tables 15 to 16 were used, and evaluated in the same manner as in the foregoing. The results obtained are shown in Tables 15 to 16.

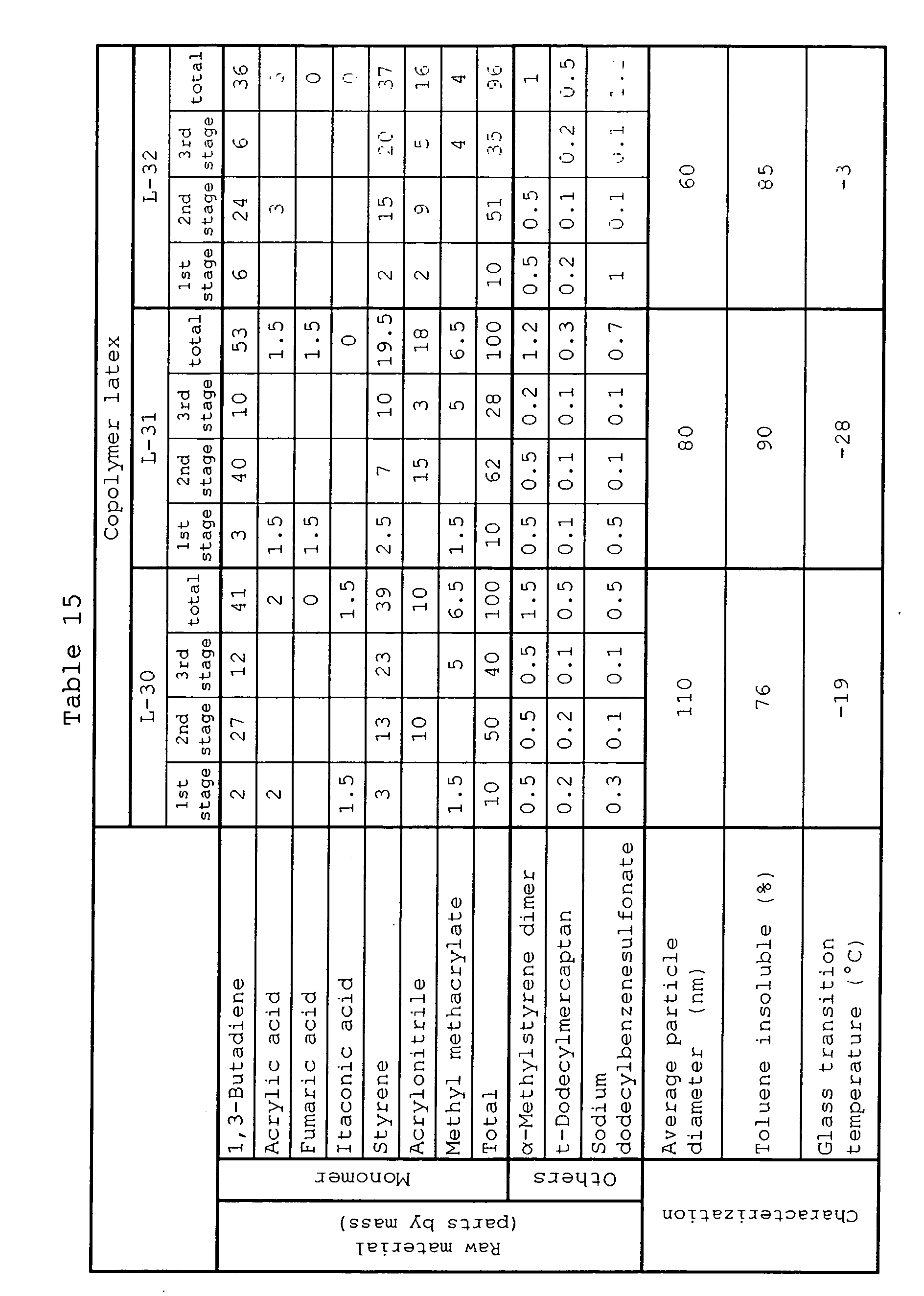

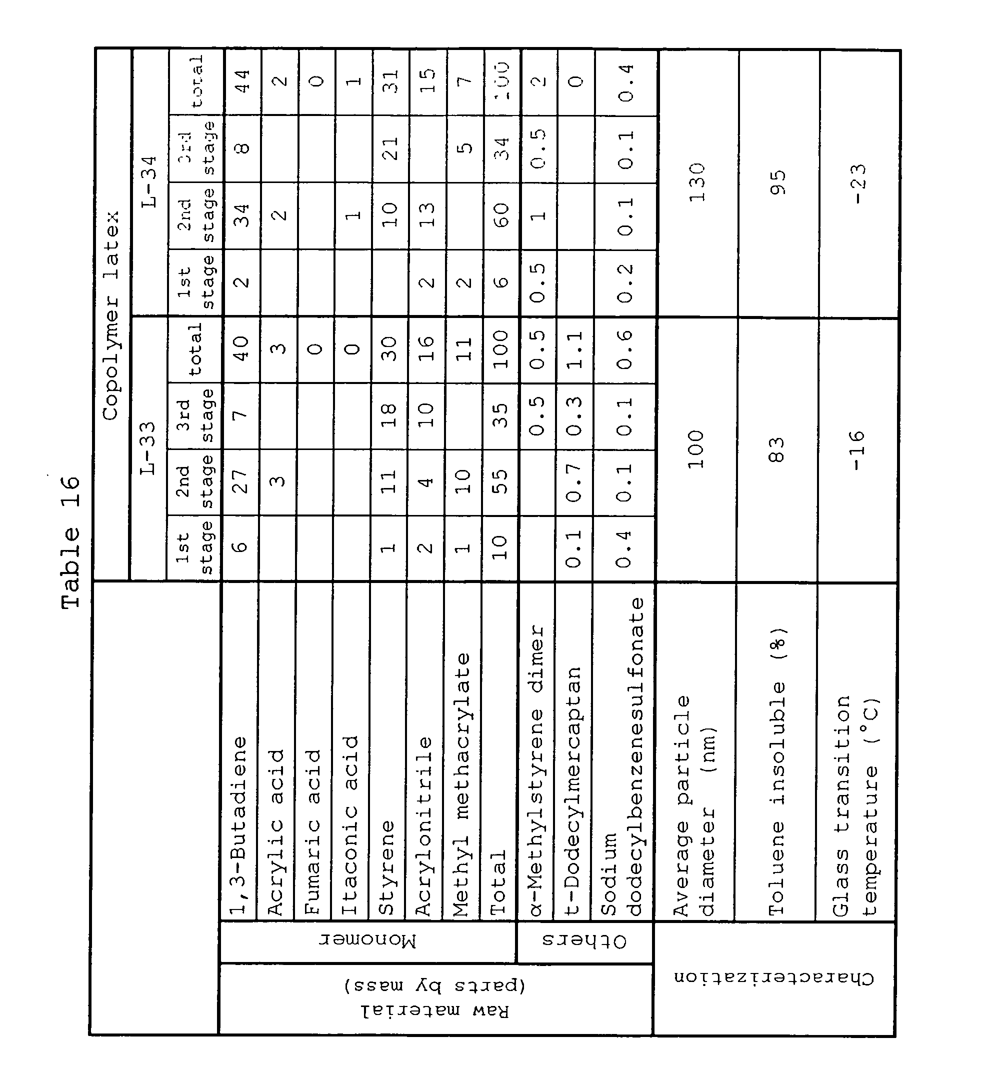

### 4-2. Preparation of Coating Compositions for Paper

Coating compositions for paper CP-35 to CP-44 for curtain coating were prepared in the formulation shown in Table 17 with the copolymer latices L-30 to L-34 produced in Production Examples 4-1 to 4-5, and the fine particle clay, the high aspect clay, the calcium carbonate, the hollow polymer particles, the thickener and the wetting agent, which were used in Example [III].

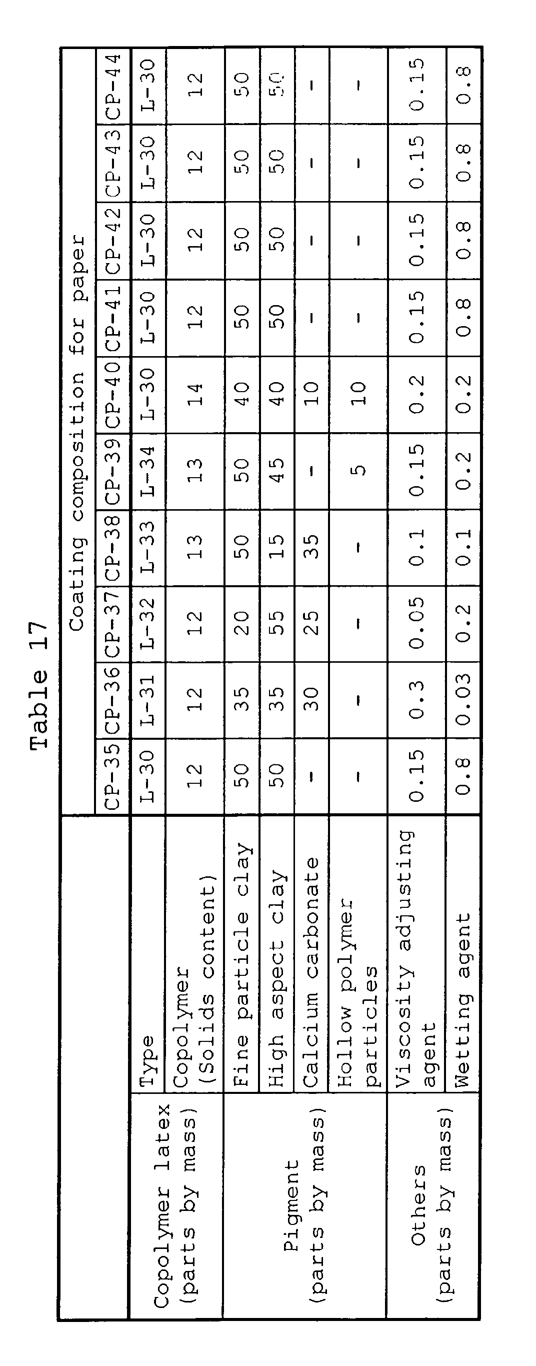

### 4-3. Production and Evaluation of Coated Paper

A coating operation was carried out by using the coating compositions for paper CP-35 to CP-44 obtained in the foregoing with a pilot curtain coater on 10 kinds of base paper, and various evaluation were effected. As the base paper, base paper Nos. 1 to 5, which were commercially available non-coated paper, and base paper Nos. 6 to 10, which were commercially available coated paper, were prepared.

The base paper Nos. 1 to 10 were measured for surface smoothness by using an optical interference non-contact three-dimensional surface roughness meter "NewView 200", produced by Zygo Corp., and the center line average roughness Ra1 in a frequency region of a spatial frequency of 25 (1/mm) or less and the center line average roughness Ra2 in a frequency region of a spatial frequency of 25 (1/mm) or more were obtained. The measurement conditions were an objective lens of magnification of 2.5, irradiation lens of magnification of 2, a measuring area of 1.45 mm x 1.08 mm, and an accumulation number of 3. The analysis was carried out by fast Fourier transformation by using the analysis software "MetroPro ver. 7.6.1", which was supplied with the aforementioned apparatus to obtain Ra1 and Ra2. Separate 10 sites were measured and analyzed for each of the base paper, and Ra1 and Ra2 were calculated as average values, respectively. The results obtained are shown in Table 18.

### Examples 4-1 to 4-6 and Comparative Examples 4-1 to 4-4

The coating compositions for paper CP-35 to CP-44 were adjusted to have the solid concentrations shown in Table 18 and coated on base paper Nos. 1 to 10 with a pilot curtain coater to obtain pigment-coated paper (D). At this time, the coating speed was gradually increased at an interval of 200 m/min, and the maximum speed, at which puddling did not occur, was designated as the "coating-enabling maximum speed (m/min)". The results obtained are shown in Table 18.

Thereafter, the pigment-coated paper (D) obtained at the coating-enabling maximum speed was allowed to stand in a constant temperature and humidity bath at a temperature of 23°C and a humidity of 50% over one day and night. The coated paper (D) was subjected four times to a super calender treatment under conditions of a linear pressure of 100 kg/cm and a roll temperature of 50°C. The resulting pigment-coated paper was evaluated for the capabilities including the following coating defects, the dry pick strength, the wet pick strength, the paper gloss, the printing gloss, the opacity and the brightness. The results obtained are shown in Table 18.

### (1) Coating Defects

By the burnout method, the pigment-coated paper was immersed in a 2% ammonium chloride aqueous solution and heated to 200°C for 3 minutes to color the fibers, and the coated paper having fibers thus colored was observed with an optical microscope at a magnification of 50 to observe the state of coating defects. In Table 18, the symbol "A" meant that no coating defect occurred, and the symbol "C" meant that coating defects occurred.

### (2) Opacity

The opacity was evaluated by the Hunter colorimetry, in which the measurement was effected with a green filter using a brightness meter. The larger the value is, the better the result is.

### (3) Brightness

The brightness was evaluated by the Hunter colorimetry, in which the measurement was effected with a blue filter using a brightness meter. The larger the value is, the better the result is.

The evaluation methods for the dry pick strength, the wet pick strength, the paper gloss and the printing gloss were the same as in Example [III].

### 4-4. Effect of Examples

As shown in Table 18, in Comparative Examples 4-1 and 4-2 where the Ra1 was outside the scope of the present invention, a puddling phenomenon did not occur until the coating speed reached 2,000 m/min, but the resulting coated paper had considerably large amounts of coating defects. Therefore, it was inferior in comparison to the coated paper of Examples 4-1 to 4-6 since the paper gloss and the printing gloss could not be exerted. Comparative Examples 4-3 and 4-4 where the Ra2 was outside the scope of the present invention were considerably low in coating-enabling maximum coating speed in comparison to Examples 4-1 to 4-6, and thus it was understood that the coating operation could not be effected due to occurrence of a puddling phenomenon when the coating speed was high. Furthermore, an anchor effect to the base paper could not be exerted, and thus it was understood that the dry pick strength was weak and inferior in comparison to the pigment-coated paper obtained in Examples 4-1 to 4-6.

On the other hand, it was understood that Examples 4-1 to 4-6 where both the Ra1 and the Ra2 were within the scope of the present invention caused no puddling phenomenon upon coating even when the coating speed was high, and the coating composition had a high solid concentration. The pigment-coated paper obtained in Examples 4-1 to 4-6 was free of coating defects and good in the dry pick strength, the wet pick strength, the paper gloss, the printing gloss, the opacity and the brightness in a well balanced manner, and thus it was excellent in comparison to the pigment-coated paper obtained in Comparative Examples 4-1 to 4-4.

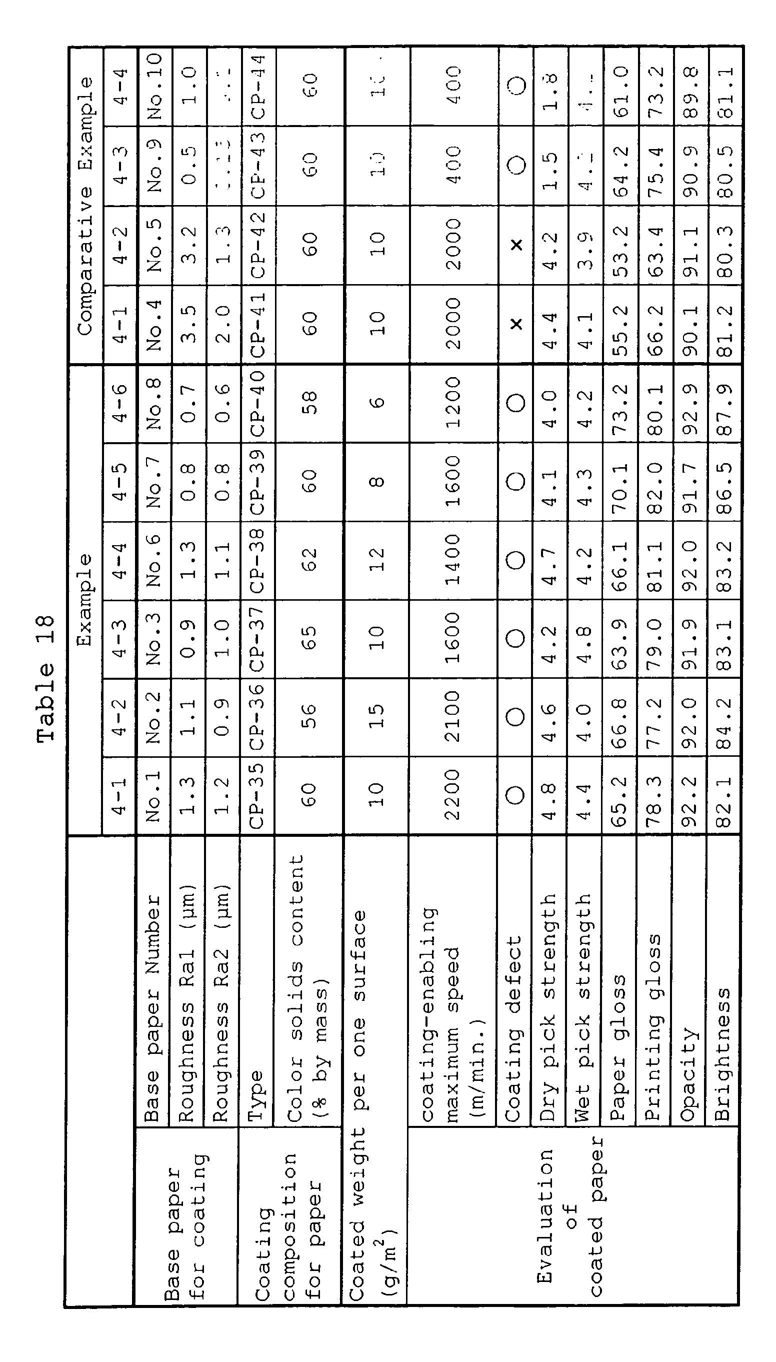

### INDUSTRIAL APPLICABILITY

The copolymer latex of the present invention is suitable for a non-contact coating method, such as a curtain coater and a spray, upon using as a coating composition for paper, and thus can be widely used in paper industry, printing industry and the like. Therefore, the coated paper thus obtained can be used as an offset printing paper, such as high-speed offset printing paper, a gravure printing paper, a letterpress paper, an ink-jet paper, an electrophotographic paper, a fine art paper, a magazine cover paper, a frontispieces paper, a poster paper, a catalog paper, a calendar paper, a brochure paper, a magazine paper, a magazine color page paper, a leaflet paper, a picture postcard paper, a card paper and the like.

## Claims

1. A copolymer latex for non-contact coating obtained by emulsion polymerization of a monomer consisting of an aliphatic conjugated diene monomer (a) in an amount from 23 to 58% by mass, an ethylenic unsaturated carboxylic acid monomer (b) in an amount from 0.1 to 7% by mass, a vinyl cyanide compound (c) in an amount from 5 to 40% by mass, and other monomer (d) capable of being copolymerized with said monomers (a), (b) and (c) in an amount from 0 to 71.9% by mass (provided that the total amount of said monomers (a), (b), (c) and (d) is 100% by mass), **characterized in that** polymer particles contained in said latex have an average particle diameter of from 50 to 150 nm.

2. A copolymer latex for non-contact coating obtained by copolymerization of a monomer consisting of an aliphatic conjugated diene monomer (a) in an amount from 20 to 80% by mass, an ethylenic unsaturated carboxylic acid monomer (b) in an amount from 0.5 to 10% by mass, and other monomer (d) capable of being copolymerized with said monomers in an amount from 20 to 79.5% by mass (provided that the total amount of said monomers (a), (b) and (d) is 100% by mass), **characterized in that** said copolymer has at least two glass transition points in a range from -100 to 50°C and has a differential calorie curve obtained with a differential scanning calorimeter, in which a difference ΔT between the lowest temperature T1 and the highest temperature T2 in a transition region is 5°C or more.

3. The copolymer latex for non-contact coating according to Claim 2, wherein said copolymer consists of (P1) a copolymer part obtained by polymerization of a monomer (m1) consisting of an aliphatic conjugated diene monomer (a1) in an amount from 25 to 100% by mass, an ethylenic unsaturated carboxylic acid monomer (b1) in an amount from 0 to 10% by mass, and other monomer (d1) capable of being copolymerized with said monomers (a1) and (b1) in an amount from 0 to 75% by mass (provided that the total amount of said monomers (a1), (b1) and (d1) is 100% by mass) and having a glass transition point of from -100 to 0°C, and (P2) a copolymer part obtained by polymerization of a monomer (m2) consisting of an aliphatic conjugated diene monomer (a2) in an amount from 10 to 60% by mass, an ethylenic unsaturated carboxylic acid monomer (b2) in an amount from 0.5 to 30% by mass, and other monomer (d2) capable of being copolymerized with said monomers (a2) and (b2) in an amount from 10 to 89.5% by mass (provided that the total amount of said monomers (a2), (b2) and (d2) is 100% by mass) and having a glass transition point of from -20 to 50°C.

4. A non-contact coating composition for paper having a viscosity of from 50 to 1,500 mPa·s and a dynamic surface tension of from 25 to 65 mN/m at a surface lifetime of 10 ms.

5. The non-contact coating composition for paper according to Claim 4, wherein said composition further comprises a fine particle clay containing a component having a particle diameter of less than 2 µm in an amount from 95 to 99% by mass and a high aspect clay containing a component having a particle diameter of less than 2 µm in an amount from 80 to 89% by mass; said composition comprises a pigment containing 40% by mass or more of said fine particle clay and said high aspect clay based on 100% by mass of the total of said pigment, a copolymer latex and a wetting agent; and a solids content of said copolymer latex is from 5 to 30 parts by mass and the content of said wetting agent is from 0.01 to 2 parts by mass based on 100 parts by mass of the total of said pigment.

6. The non-contact coating composition for paper according to Claim 5, wherein said copolymer latex is obtained by copolymerization of an aliphatic conjugated diene monomer (a) in an amount from 30 to 60% by mass, an ethylenic unsaturated carboxylic acid monomer (b) in an amount from 0.1 to 7% by mass, and other monomer (d) capable of being copolymerized with said monomers in an amount from 33 to 69.9% by mass (provided that the total amount of said monomers (a), (b) and (d) is 100% by mass).

7. A process for producing coated paper comprising a coating step of coating a non-contact coating composition for paper comprising said copolymer latex for non-contact coating as defined in one of Claims 1 to 3 or said non-contact coating composition for paper as defined in one of Claims 4 to 6 on a surface of base paper at a coating speed of 600 to 2,800 m/min by a non-contact coating method; and a drying step of drying a coated film.

8. A process for producing coated paper comprising a step of coating a non-contact coating composition for paper comprising a pigment on a surface of base paper by a non-contact coating method, **characterized in that** said base paper has a center line average roughness of 3 µm or less in a frequency region of a spatial frequency of 25 (1/mm) or less and a center line average roughness of 0.2 µm or more in a frequency region of a spatial frequency of 25 (1/mm) or more.

9. The process for producing coated paper according to Claim 8, wherein a coating speed is from 600 to 2,800 m/min.

10. The process for producing coated paper according to Claim 8 or 9, wherein said non-contact coating composition for paper further comprises a copolymer latex and a wetting agent, and a solids content of said copolymer latex is from 5 to 30 parts by mass and a content of said wetting agent is from 0.01 to 2 parts by mass based on 100 parts by mass of the total of said pigment.

11. The process for producing coated paper according to Claims 8 to 10, wherein said pigment consist of a fine particle clay containing a component having a particle diameter of less than 2 µm in an amount from 95 to 99% by mass, a high aspect clay containing a component having a particle diameter of less than 2 µm in an amount from 80 to 89% by mass, and other pigment, and a content ratio of said fine particle clay and said high aspect clay is from 1/3 to 5/1, and a content of said other pigment is 60% by mass or less based on 100% by mass of the total of said pigment.

12. The process for producing coated paper according to Claims 7 to 11, wherein said non-contact coating method is a method selected from a curtain coating method and a spray coating method.

13. A coated paper **characterized in that** it is obtained by said process as defined in Claims 7 to 12.
